# EUROPEAN PATENT SPECIFICATION

(11) **EP 3 783 605 B1**
(45) Date of publication and mention of the grant of the patent: **02.10.2024**
(21) Application number: 20192264.8
(22) Date of filing: 21.08.2020
(51) Int. Cl.: G10L 15/24, G10L 15/16, G10L 15/28, G10L 15/183, G10L 15/02, G10L 15/20

(54) **VEHICLE-MOUNTED APPARATUS, METHOD OF PROCESSING UTTERANCE, AND PROGRAM**
FAHRZEUGMONTIERTE VORRICHTUNG, VERFAHREN ZUR VERARBEITUNG VON ÄUSSERUNGEN UND PROGRAMM
APPAREIL MONTÉ SUR UN VÉHICULE, PROCÉDÉ DE TRAITEMENT D'ÉNONCÉ ET PROGRAMME

(30) Priority: 23.08.2019 JP 2019152908
(43) Date of publication of application: 24.02.2021
(60) Divisional application: 21197560.2
(73) Proprietor: SoundHound, Inc., Santa Clara, CA 95054 (US)
(72) Inventor: HOLM, Steffen, Santa Clara, CA California 95054 (US)
(74) Representative: Smith, Jeremy Robert

(56) References cited:
- US-B2- 6 964 023
- BRENDAN SHILLINGFORD ET AL: "Large-Scale Visual Speech Recognition", ARXIV.ORG, CORNELL UNIVERSITY LIBRARY, 201 OLIN LIBRARY CORNELL UNIVERSITY ITHACA, NY 14853, 13 July 2018 (2018-07-13), XP081415408
- MIAO YAJIE ET AL: "Improvements to speaker adaptive training of deep neural networks", 2014 IEEE SPOKEN LANGUAGE TECHNOLOGY WORKSHOP (SLT), IEEE, 7 December 2014 (2014-12-07), pages 165 - 170, XP032756921, DOI: 10.1109/SLT.2014.7078568
- CHAO GUAN-LIN ET AL: "Deep Speaker Embedding for Speaker-Targeted Automatic Speech Recognition", NATURAL LANGUAGE PROCESSING AND INFORMATION RETRIEVAL, 28 June 2019 (2019-06-28), 2 Penn Plaza, Suite 701New YorkNY10121-0701USA, pages 39 - 43, XP055854228, ISBN: 978-1-4503-6279-5, Retrieved from the Internet <URL:https://dl.acm.org/doi/pdf/10.1145/3342827.3342847> DOI: 10.1145/3342827.3342847
- "16th European Conference - Computer Vision - ECCV 2020", vol. 8082, 1 January 2013, CORNELL UNIVERSITY LIBRARY,, 201 Olin Library Cornell University Ithaca, NY 14853, article CAMPR PAVEL ET AL: "Online Speaker Adaptation of an Acoustic Model Using Face Recognition", pages: 378 - 385, XP055854227, DOI: 10.1007/978-3-642-40585-3_48

## Description

### FIELD

The present technology is in the field of speech processing. Certain examples relate to processing speech captured from within a vehicle.

### BACKGROUND

Recent advances in computing have raised the possibility of realizing many long sought-after voice-control applications. For example, improvements in statistical models, including practical frameworks for effective neural network architectures, have greatly increased the accuracy and reliability of previous speech processing systems. This has been coupled with a rise in wide area computer networks, which offer a range of modular services that can be simply accessed using application programming interfaces. Voice is quickly becoming a viable option for providing a user interface.

While voice control devices have become popular within the home, providing speech processing within vehicles presents additional challenges. For example, vehicles often have limited processing resources for auxiliary functions (such as voice interfaces), suffer from pronounced noise (e.g., high levels of road and/or engine noise) and present constraints in terms of the acoustic environment. Any user interface is furthermore constrained by the safety implications of controlling a vehicle. These factors have made within vehicle voice control difficult to achieve in practice.

Also, despite advances in speech processing, even users of advanced computing devices often report that current systems lack human-level responsiveness and intelligence. Translating pressure fluctuations in the air into parsed commands is incredibly difficult. Speech processing typically involves a complex processing pipeline, where errors at any stage can derail a successful machine interpretation. Many of these challenges are not immediately apparent to human beings, who are able to process speech using cortical and sub-cortical structures without conscious thought. Engineers working in the field, however, quickly become aware of the gap between human ability and state of the art speech processing.

US 8,442,820 B2 (Patent Document 1) describes a combined lip reading and voice recognition multimodal interface system. The system can issue a navigation operation instruction only by voice and lip movements, thus allowing a driver to look ahead during a navigation operation and reducing vehicle accidents related to navigation operations during driving. The combined lip reading and voice recognition multimodal interface system described in US 8,442,820 B2 comprises an audio voice input unit; a voice recognition unit; a voice recognition instruction and estimated probability output unit; a lip video image input unit; a lip reading unit; a lip reading recognition instruction output unit; and a voice recognition and lip reading recognition result combining unit that outputs the voice recognition instruction. While US 8,442,820 B2 provides one solution for in vehicle control, the proposed system is complex and the many interoperating components present increased opportunity for error and parsing failure.

It is desired to provide speech processing systems and methods that more accurately transcribe and parse human utterances. It is further desired to provide speech processing methods that may be practically implemented with real world devices, such as embedded computing systems for vehicles. Implementing practical speech processing solutions is difficult as vehicles present many challenges for system integration and connectivity.

[Patent Document 1] United Patent Specification No. 8,422,820.

US 6964023 B2 describes systems and methods for performing focus detection, referential ambiguity resolution and mood classification in accordance with multi-modal input data, in varying operating conditions, in order to provide an effective conversational computing environment for one or more users.

Reference is made to BRENDAN SHILLINGFORD ET AL: "Large-Scale Visual Speech Recognition", ARXIV.ORG, CORNELL UNIVERSITY LIBRARY, 201 OLIN LIBRARY CORNELL UNIVERSITY ITHACA, NY 14853, 13 July 2018.

Reference is made to MIAO YAJIE ET AL: "Improvements to speaker adaptive training of deep neural networks", 2014 IEEE SPOKEN LANGUAGE TECHNOLOGY WORKSHOP (SLT), IEEE, 7 December 2014, pages 165-170.

Reference is made to Chao Guan-Lin ET AL: "Deep Speaker Embedding for Speaker-Targeted Automatic Speech Recognition", Natural Language Processing and Information Retrieval, 28 June 2019, pages 39-43.

Reference is made to Campr Pavel ET AL: "Online Speaker Adaptation of an Acoustic Model Using Face Recognition", 16th European Conference on Computer Vision, January 2013.

### SUMMARY

The object of the invention is to overcome shortcomings of the prior art.

This object is achieved by the invention defined in the appended independent claims.

Preferred embodiments of the invention are set out in the appended dependent claims.

Certain examples described herein provide methods and systems for processing speech. Certain examples use both audio data and image data to process speech. Certain examples are adapted to address challenges of processing utterances that are captured within a vehicle. Certain examples obtain a speaker feature vector based on image data that features at least a facial area of a person, e.g., a person within the vehicle. Speech processing is then performed using vision-derived information that is dependent on a speaker of an utterance. This may improve accuracy and robustness.

The present invention provides an apparatus for a vehicle-mounted apparatus, as set out in independent claim 1.

The present invention further provides a computer-implemented method of processing an utterance, as set out in independent claim 13.

The present invention also provides a program, as set out in independent claim 14.

### BRIEF DESCRIPTION OF THE DRAWINGS

FIG. 1A is a schematic illustration showing an interior of a vehicle according to an example.
FIG. 1B is a schematic illustration showing an apparatus for a vehicle according to an example.
FIG. 2 is a schematic illustration showing an apparatus for a vehicle with a speaker preprocessing module according to an example.
FIG. 3 is a schematic illustration showing components of a speaker preprocessing module according to an example.
FIG. 4 is a schematic illustration showing components of a speech processing module according to an example.
FIG. 5 is a schematic illustration showing a neural speaker preprocessing module and a neural speech processing module according to an example.
FIG. 6 is a schematic illustration showing components to configure an acoustic model of a speech processing module according to an example.
FIG. 7 is a schematic illustration showing an image preprocessor according to an example.
FIG. 8 is a schematic illustration showing image data from different image capture devices according to an example.
FIG. 9 is a schematic illustration showing components of a speaker preprocessing module configured to extract lip features according to an example.
FIGS. 10A and 10B are schematic illustrations showing a motor vehicle with an apparatus for speech processing according to an example.
FIG. 11 is a schematic illustration showing components of a user interface for a motor vehicle according to an example.
FIG. 12 is a schematic illustration showing an example computing device for a vehicle.
FIG. 13 is a flow diagram showing a method of processing an utterance according to an example.
FIG. 14 is a schematic illustration showing a non-transitory computer-readable storage medium according to an example.

### DETAILED DESCRIPTION

The following describes various examples of the present technology that illustrate various interesting aspects. Generally, examples can use the described aspects in any combination.

Certain examples described herein use visual information to improve speech processing. This visual information may be obtained from within a vehicle. In examples, the visual information features a person within the vehicle, e.g., a driver or a passenger. Certain examples use the visual information to generate a speaker feature vector for use by an adapted speech processing module. The speech processing module may be configured to use the speaker feature vector to improve the processing of associated audio data, e.g., audio data derived from an audio capture device within the vehicle. The examples may improve the responsiveness and accuracy of in-vehicle speech interfaces. Certain examples may be used by computing devices to improve speech transcription. As such, described examples may be seen to extend speech processing systems with multi-modal capabilities that improve the accuracy and reliability of audio processing.

Certain examples described herein provide different approaches to generate a speaker feature vector. Certain approaches are complementary and may be used together to synergistically improve speech processing. In one example, image data obtained from within a vehicle, such as from a driver and/or passenger camera, is processed to identify a person and to determine a feature vector that numerically represents certain characteristics of the person. These characteristics may comprise audio characteristics, e.g., a numerical representation of expected variance within audio data for an acoustic model. In another example, image data obtained from within a vehicle, such as from a driver and/or passenger camera, is processed to determine a feature vector that numerically represents certain visual characteristics of the person, e.g., characteristics associated with an utterance by the person. In one case, the visual characteristics may be associated with a mouth area of the person, e.g., represent lip position and/or movement. In both examples, a speaker feature vector may have a similar format, and so be easily integrated into an input pipeline of an acoustic model that is used to generate phoneme data. Certain examples may provide improvements that overcome certain challenges of in-vehicle automatic speech recognition, such as a confined interior of a vehicle, a likelihood that multiple people may be speaking within this confined interior and high levels of engine and environmental noise.

### Example Vehicle Context

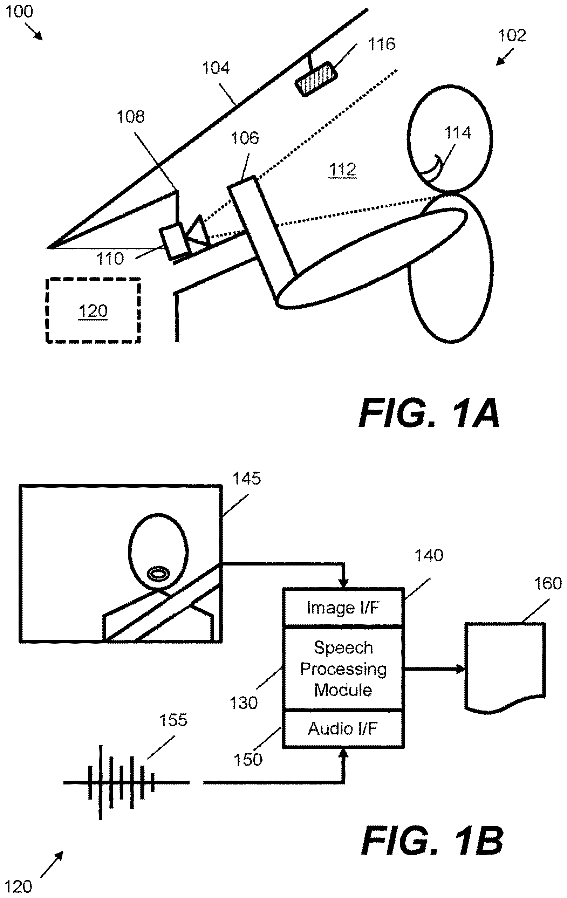

FIG. 1A shows an example context for a speech processing apparatus. In FIG. 1A, the context is a motor vehicle. FIG. 1A is a schematic illustration of an interior 100 of a motor vehicle. The interior 100 is shown for a front driver side of the motor vehicle. A person 102 is shown within the interior 100. In FIG. 1A, the person is a driver of the motor vehicle. The driver faces forward in the vehicle and observes a road through windshield 104. The person controls the vehicle using a steering wheel 106 and observes vehicle status indications via a dashboard or instrument panel 108. In FIG. 1A, an image capture device 110 is located within the interior 100 of the motor vehicle near the bottom of the dashboard 108. The image capture device 110 has a field of view 112 that captures a facial area 114 of the person 102. In this example, the image capture device 110 is positioned to capture an image through an aperture of the steering wheel 106. FIG. 1A also shows an audio capture device 116 that is located within the interior 100 of the motor vehicle. The audio capture device 116 is arranged to capture sounds that are made by the person 102. For example, the audio capture device 116 may be arranged to capture speech from the person 102, i.e. sounds that are emitted from the facial area 114 of the person. The audio capture device 116 is shown mounted to the windshield 104, e.g., it may be mounted near to or on a rear-view mirror, or be mounted on a door frame to a side of the person 102. FIG. 1A also shows a speech processing apparatus 120. The speech processing apparatus 120 may be mounted on the motor vehicle. The speech processing apparatus 120 may comprise, or form part of, a control system for the motor vehicle. In the example of FIG. 1A, the image capture device 110 and the audio capture device 116 are communicatively coupled to the speech processing apparatus 120, e.g., via one or more wired and/or wireless interfaces. The image capture device 110 can be located outside the motor vehicle to capture an image within the motor vehicle through window glasses of the motor vehicle.

The context and configuration of FIG. 1A is provided as an example to aid understanding of the following description. It should be noted that the examples need not be limited to a motor vehicle but may be similarly implemented in other forms of vehicle including, but not limited to: nautical vehicles such as boats and ships; aerial vehicles such as helicopters, planes and gliders; railed vehicles such as trains and trams; spacecraft, construction vehicles and heavy equipment. Motor vehicles may include cars, trucks, sports utility vehicles, motorbikes, buses, and motorized carts, amongst others. Use of the term "vehicle" herein also includes certain heavy equipment that may be motorized while remaining static, such as cranes, lifting devices and boring devices. Vehicles may be manually controlled and/or have autonomous functions. Although the example of FIG. 1A features a steering wheel 106 and dashboard 108, other control arrangements may be provided (e.g., an autonomous vehicle may not have a steering wheel 106 as depicted). Although a driver seat context is shown in FIG. 1A, a similar configuration may be provided for one or more passenger seats (e.g. both front and rear). FIG. 1A is provided for illustration only and omits certain features that may also be found within a motor vehicle for clarity. In certain cases, the approaches described herein may be used outside of a vehicle context, e.g., may be implemented by a computing device such as a desktop or laptop computer, a smartphone, or an embedded device.

FIG. 1B is a schematic illustration of the speech processing apparatus 120 shown in FIG. 1A. In FIG. 1B, the speech processing apparatus 120 comprises a speech processing module 130, an image interface 140 and an audio interface 150. The image interface 140 is configured to receive image data 145. The image data may comprise image data captured by the image capture device 110 in FIG. 1A. The audio interface 150 is configured to receive audio data 155. The audio data 155 may comprise audio data captured by the audio capture device 116 in FIG. 1A. The speech processing module 130 is communicatively coupled to both the image interface 140 and the audio interface 150. The speech processing module 130 is configured to process the image data 145 and the audio data 155 to generate a set of linguistic features 160 that are useable to parse an utterance of the person 102. The linguistic features may comprise phonemes, word portions (e.g., stems or proto-words), and words (including text features such as pauses that are mapped to punctuation), as well as probabilities and other values that relate to these linguistic units. In one case, the linguistic features may be used to generate a text output that represents the utterance. In this case, the text output may be used as-is or may be mapped to a predefined set of commands and/or command data. In another case, the linguistic features may be directly mapped to the predefined set of commands and/or command data (e.g. without an explicit text output).

A person (such as person 102) may use the configuration of FIGS. 1A and 1B to issue voice commands while operating the motor vehicle. For example, the person 102 may speak within the interior, e.g., generate an utterance, in order to control the motor vehicle or obtain information. An utterance in this context is associated with a vocal sound produced by the person that represents linguistic information such as speech. For example, an utterance may comprise speech that emanates from a larynx of the person 102. The utterance may comprise a voice command, e.g., a spoken request from a user. The voice command may comprise, for example: a request to perform an action (e.g., "Play music", "Turn on air conditioning", "Activate cruise control"); further information relating to a request (e.g., "Album XY", "68 degrees Fahrenheit", "60 mph for 30 minutes"); speech to be transcribed (e.g., "Add to my to do list...." or "Send the following message to user A...."); and/or a request for information (e.g., "What is the traffic like on C?", "What is the weather like today?", or "Where is the nearest gas station?").

The audio data 155 may take a variety of forms depending on the implementation. In general, the audio data 155 may be derived from time series measurements from one or more audio capture devices (e.g., one or more microphones), such as audio capture device 116 in FIG. 1A. In certain cases, the audio data 155 may be captured from one audio capture device; in other cases, the audio data 155 may be captured from multiple audio capture devices, e.g., there may be multiple microphones at different positions within the interior 100. In the latter case, the audio data may comprise one or more channels of temporally correlated audio data from each audio capture device. Audio data at the point of capture may comprise, for example, one or more channels of Pulse Code Modulation (PCM) data at a predefined sampling rate (e.g., 16kHz), where each sample is represented by a predefined number of bits (e.g., 8, 16 or 24 bits per sample - where each sample comprises an integer or float value).

In certain cases, the audio data 155 may be processed after capture but before receipt at the audio interface 150 (e.g., preprocessed with respect to speech processing). Processing may comprise one or more of filtering in one or more of the time and frequency domains, applying noise reduction, and/or normalization. In one case, audio data may be converted into measurements over time in the frequency domain, e.g., by performing the Fast Fourier Transform to create one or more frames of spectrogram data. In certain cases, filter banks may be applied to determine values for one or more frequency domain features, such as Mel filter banks or Mel-Frequency Cepstral Coefficients. In these cases, the audio data 155 may comprise an output of one or more filter banks. In other cases, audio data 155 may comprise time domain samples and preprocessing may be performed within the speech processing module 130. Different combinations of approach are possible. Audio data as received at the audio interface 150 may thus comprise any measurement made along an audio processing pipeline.

In a similar manner to the audio data, the image data described herein may take a variety of forms depending on the implementation. In one case, the image capture device 110 may comprise a video capture device, wherein the image data comprises one or more frames of video data. In another case, the image capture device 110 may comprise a static image capture device, wherein the image data comprises one or more frames of static images. Hence, the image data may be derived from both video and static sources. Reference to image data herein may relate to image data derived, for example, from a two-dimensional array having a height and a width (e.g., equivalent to rows and columns of the array). In one case, the image data may have multiple color channels, e.g., comprise three color channels for each of the colors Red Green Blue (RGB), where each color channel has an associated two-dimensional array of color values (e.g., at 8, 16 or 24 bits per array element). Color channels may also be referred to as different image "planes". In certain cases, only a single channel may be used, e.g., representing a "gray" or lightness channel. Different color spaces may be used depending on the application, e.g., an image capture device may natively generate frames of YUV image data featuring a lightness channel Y (e.g., luminance) and two opponent color channels U and V (e.g., two chrominance components roughly aligned with blue-green and red-green). As with the audio data 155, the image data 145 may be processed following capture, e.g., one or more image filtering operations may be applied and/or the image data 145 may be resized and/or cropped.

With reference to the example of FIGS. 1A and 1B, one or more of the image interface 140 and the audio interface 150 may be local to hardware within the motor vehicle. For example, each of the image interface 140 and the audio interface 150 may comprise a wired coupling of respective image and audio capture devices to at least one processor configured to implement the speech processing module 130. In one case, the image and audio interfaces 140, 150 may comprise a serial interface over which image and audio data 145, 155 may be received. In a distributed vehicle control system, the image and audio capture devices 140, 150 may be communicatively coupled to a central systems bus, wherein image and audio data 145, 155 may be stored in one or more storage devices (e.g., Random Access Memory or solid-state storage). In this latter case, the image and audio interfaces 140, 150 may comprise a communicative coupling of the at least one processor configured to implement the speech processing module to the one or more storage devices, e.g., the at least one processor may be configured to read data from a given memory location to access each of the image and audio data 145, 155. In certain cases, the image and audio interfaces 140, 150 may comprise wireless interfaces, wherein the speech processing module 130 may be remote from the motor vehicle. Different approaches and combinations are possible.

Although FIG. 1A shows an example where the person 102 is a driver of a motor vehicle, in other applications, one or more image and audio capture devices may be arranged to capture image data featuring a person that is not controlling the motor vehicle such as a passenger. For example, a motor vehicle may have a plurality of image capture devices that are arranged to capture image data relating to people present in one or more passenger seats of the vehicle (e.g., at different locations within the vehicle such as front and back). Audio capture devices may also be likewise arranged to capture utterances from different people, e.g., a microphone may be located in each door or door frame of the vehicle. In one case, a plurality of audio capture devices may be provided within the vehicle and audio data may be captured from one or more of these for the supply of data to the audio interface 150. In one case, preprocessing of audio data may comprise selecting audio data from a channel that is deemed to be closest to a person making an utterance and/or combining audio data from multiple channels within the motor vehicle. As described later, certain examples described herein facilitate speech processing in a vehicle with multiple passengers.

### Example Speaker Preprocessing Module

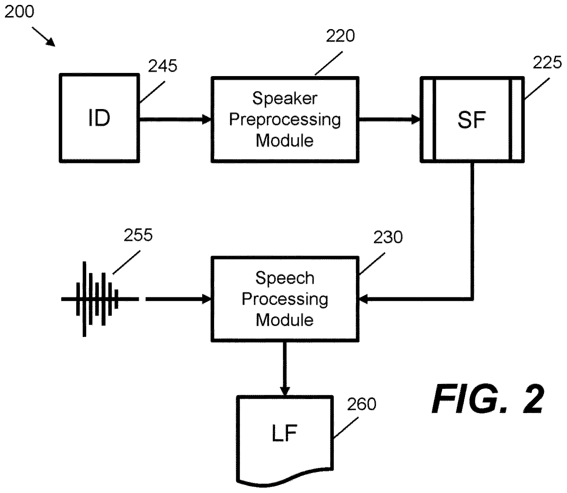

FIG. 2 shows an example speech processing apparatus 200. For example, the speech processing apparatus 200 may be used to implement the speech processing apparatus 120 shown in FIGS. 1A and 1B. The speech processing apparatus 200 may form part of an in-vehicle automatic speech recognition system. In other cases, the speech processing apparatus 200 may be adapted for use outside of a vehicle, such as in the home or in an office.

The speech processing apparatus 200 comprises a speaker preprocessing module 220 and a speech processing module 230. The speech processing module 230 may be similar to the speech processing module 130 of FIG. 1B. In this example, the image interface 140 and the audio interface 150 have been omitted for clarity; however, these may respectively form part of the image input of the speaker preprocessing module 220 and the audio input for the speech processing module 230. The speaker preprocessing module 220 is configured to receive image data 245 and to output a speaker feature vector 225. The speech processing module 230 is configured to receive audio data 255 and the speaker feature vector 225 and to use these to generate linguistic features 260.

The speech processing module 230 is implemented by a processor. The processor may be a processor of a local embedded computing system within a vehicle and/or a processor of a remote server computing device (a so-called "cloud" processing device). In one case, the processor may comprise part of dedicated speech processing hardware, e.g., one or more Application Specific Integrated Circuits (ASICs), Field Programmable Gate Arrays (FPGAs) and so-called "system on chip" (SoC) components. In another case, the processor may be configured to process computer program code, e.g., firmware or the like, stored within an accessible storage device and loaded into memory for execution by the processor. The speech processing module 230 is configured to parse an utterance of a person, e.g., person 102, based on the audio data 225 and the image data 245. In the present case, the image data 245 is preprocessed by the speaker preprocessing module 220 to generate the speaker feature vector 225. Similar to the speech processing module 230, the speaker preprocessing module 220 may be any combination of hardware and software. In one case, the speaker preprocessing module 220 and the speech processing module 230 may be implemented on a common embedded circuit board for a vehicle.

In one case, the speech processing module 230 comprises an acoustic model configured to process the audio data 255 and to predict phoneme data for use in parsing the utterance. In this case, the linguistic features 260 may comprise phoneme data. The phoneme data may relate to one or more phoneme symbols, e.g., from a predefined alphabet or dictionary. In one case, the phoneme data may comprise a predicted sequence of phonemes; in another case, the phoneme data may comprise probabilities for one or more of a set of phoneme components, e.g., phoneme symbols and/or sub-symbols from the predefined alphabet or dictionary, and a set of state transitions (e.g., for a Hidden Markov Model). The acoustic model may be configured to receive audio data in the form of an audio feature vector. The audio feature vector may comprise numeric values representing one or more of Mel Frequency Cepstral Coefficients (MFCCs) and Filter Bank outputs. In certain cases, the audio feature vector may relate to a current window within time (often referred to as a "frame") and comprise differences relating to changes in features between the current window and one or more other windows in time (e.g., previous windows). The current window may have a width within a w millisecond range, e.g. in one case w may be around 25 milliseconds. Other features may comprise signal energy metrics and an output of logarithmic scaling, amongst others. The audio data 255, following preprocessing, may comprise a frame (e.g. a vector) of a plurality of elements (e.g. from 10 to over 1000 elements), each element comprising a numeric representation associated with a particular audio feature. In certain examples, there may be around 25-50 Mel filter bank features, a similar sized set of intra features, a similar sized set of delta features (e.g., representing a first-order derivative), and a similar sized set of double delta features (e.g., representing a second-order derivative).

The speaker preprocessing module 220 may be configured to obtain the speaker feature vector 225 in a number of different ways. In one case, the speaker preprocessing module 220 may obtain at least a portion of the speaker feature vector 225 from a memory, e.g., via a look-up operation. In one case, a portion of the speaker feature vector 225 comprising an i and/or x vector as set out below may be retrieved from memory. In this case, the image data 245 may be used to determine a particular speaker feature vector 225 to retrieve from the memory. For example, the image data 245 may be classified by the speaker preprocessing module 220 to select one particular user from a set of registered users. The speaker feature vector 225 in this case may comprise a numeric representation of features that are correlated with the selected particular user. In another case, the speaker preprocessing module 220 may compute the speaker feature vector 225. For example, the speaker preprocessing module 220 may compute a compressed or dense numeric representation of salient information within the image data 245. This may comprise a vector having a number of elements that is smaller in size than the image data 245. The speaker preprocessing module 220 in this case may implement an information bottleneck to compute the speaker feature vector 225. In one case, the computation is determined based on a set of parameters, such as a set of weights, biases and/or probability coefficients. Values for these parameters may be determined via a training phase that uses a set of training data. In one case, the speaker feature vector 225 may be buffered or stored as a static value following a set of computations. In this case, the speaker feature vector 225 may be retrieved from a memory on a subsequent utterance based on the image data 245. Further examples explaining how a speaker feature vector may be computed are set out below. In a case, where the speaker feature vector 225 comprises a component that relates to lip movement, this component may be provided on a real-time or near real-time basis and may not be retrieved from data storage.

In one case, a speaker feature vector 225 may comprise a fixed length one-dimensional array (e.g., a vector) of numeric values, e.g., one value for each element of the array. In other cases, the speaker feature vector 225 may comprise a multi-dimensional array, e.g. with two or more dimensions representing multiple one-dimensional arrays. The numeric values may comprise integer values (e.g., within a range set by a particular bit length - 8 bits giving a range of 0 to 255) or floating-point values (e.g., defined as 32-bit or 64-bit floating point values). Floating-point values may be used if normalization is applied to the visual feature tensor, e.g., if values are mapped to a range of 0 to 1 or -1 to 1. The speaker feature vector 225, as an example, may comprise a 256-element array, where each element is an 8 or 16-bit value, although the form may vary based on the implementation. In general, the speaker feature vector 225 has an information content that is less than a corresponding frame of image data, e.g., using the aforementioned example, a speaker feature vector 225 of length 256 with 8-bit values is smaller than a 640 by 480 video frame having 3 channels of 8-bit values - 2048 bits vs 7372800 bits. Information content may be measured in bits or in the form of an entropy measurement.

In one case, the speech processing module 230 comprises an acoustic model and the acoustic model comprises a neural network architecture. For example, the acoustic model may comprise one or more of: a Deep Neural Network (DNN) architecture with a plurality of hidden layers; a hybrid model comprising a neural network architecture and one or more of a Gaussian Mixture Model (GMM) and a Hidden Markov Model (HMM); and a Connectionist Temporal Classification (CTC) model, e.g., comprising one or more recurrent neural networks that operates over sequences of inputs and generates sequences of linguistic features as an output. The acoustic model may output predictions at a frame level (e.g., for a phoneme symbol or sub-symbol) and use previous (and in certain cases future) predictions to determine a possible or most likely sequence of phoneme data for the utterance. Approaches such as beam search and the Viterbi algorithm may be used on an output end of the acoustic model to further determine the sequence of phoneme data that is output from the acoustic model. Training of the acoustic model may be performed time step by time step.

In the case that the speech processing module 230 comprises an acoustic model and the acoustic model comprises a neural network architecture (e.g., is a "neural" acoustic model), the speaker feature vector 225 may be provided as an input to the neural network architecture together with the audio data 255. The speaker feature vector 225 and the audio data 255 may be combined in a number of ways. In a simple case, the speaker feature vector 225 and the audio data 255 may be concatenated into a longer combined vector. In another case, different input preprocessing may be performed on each of the speaker feature vector 225 and the audio data 255, e.g., one or more attention, feed-forward and/or embedding layers may be applied and then the result of these layers combined. Different sets of layers may be applied to the different inputs. In other cases, the speech processing module 230 may comprise another form of statistical model, e.g., a probabilistic acoustic model, wherein the speaker feature vector 225 comprises one or more numeric parameters (e.g., probability coefficients) to configure the speech processing module 230 for a particular speaker.

The example speech processing apparatus 200 provides improvements for speech processing within a vehicle. Within a vehicle there may be high levels of ambient noise, such as road and engine noise. There may also be acoustic distortions caused by the enclosed interior space of the motor vehicle. These factors may make it difficult to process audio data in comparative examples, e.g., the speech processing module 230 may fail to generate linguistic features 260 and/or generate poorly matching sequences of linguistic features 260. However, the arrangement of FIG. 2 allows the speech processing module 230 to be configured or adapted based on speaker features determined based on the image data 245. This provides additional information to the speech processing module 230 such that it may select linguistic features that are consistent with a particular speaker, e.g., by exploiting correlations between appearance and acoustic characteristics. These correlations may be long-term temporal correlations such as general facial appearance and/or short-term temporal correlations such as particular lip and mouth positions. This leads to greater accuracy despite the challenging noise and acoustic context. This may help reduce utterance parsing errors, e.g., improve an end-to-end transcription path, and/or improve the audio interface for performing voice commands. In certain cases, the present example may be able to take advantage of an existing driver-facing camera that is normally configured to monitor the driver to check for drowsiness and/or distraction. In certain cases, there may be a speaker dependent feature vector component that is retrieved based on a recognized speaker and/ a speaker dependent feature vector component that comprises mouth movement features. The latter component may be determined based on a function that is not configured for individual users, e.g. a common function for all users may be applied, but the mouth movement would be associated with a speaker. In certain other cases, the extraction of mouth movement features may be configured based on a particular identified user.

### Face Recognition Example

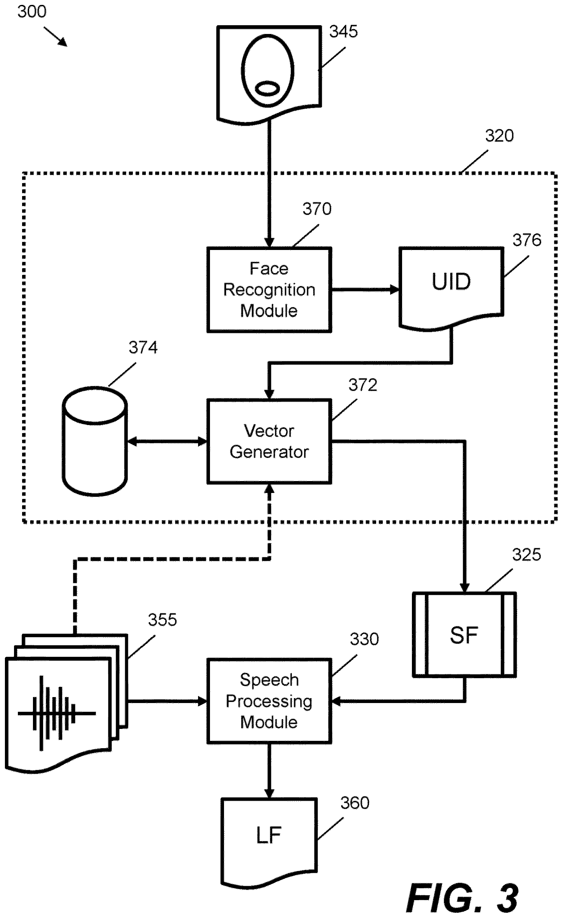

FIG. 3 shows an example speech processing apparatus 300. The speech processing apparatus 300 shows additional components that may be used to implement the speaker preprocessing module 220 in FIG. 2. Certain components shown in FIG. 3 are similar to their counterparts shown in FIG. 2 and have similar reference numerals. The features described above with reference to FIG. 2 may also apply to the example 300 of FIG. 3. Like the example speech processing apparatus 200 of FIG. 2, the example speech processing apparatus 300 of FIG. 3 comprises a speaker preprocessing module 320 and a speech processing module 330. The speech processing module 330 receives audio data 355 and a speaker feature vector 325 and computes a set of linguistic features 360. The speech processing module 330 may be configured in a similar manner to the examples described above with reference to FIG. 2.

In FIG. 3, a number of subcomponents of the speaker preprocessing module 320 are shown. These comprise a face recognition module 370, a vector generator 372 and a data store 374. Although these are shown as subcomponents of the speaker preprocessing module 320 in FIG.3, in other examples they may be implemented as separate components. In the example of FIG. 3, the speaker preprocessing module 320 receives image data 345 that features a facial area of a person. The person may comprise a driver or passenger in a vehicle as described above. The face recognition module 370 performs facial recognition on the image data to identify the person, e.g., the driver or passenger within the vehicle. The face recognition module 370 may comprise any combination of hardware and software to perform the facial recognition. In one case, the face recognition module 370 may be implemented using an off-the-shelf hardware component such as a B5T-007001 supplied by Omron Electronics Inc. In the present example, the face recognition module 370 detects a user based on the image data 345 and outputs a user identifier 376. The user identifier 376 is passed to the vector generator 372. The vector generator 372 uses the user identifier 376 to obtain a speaker feature vector 325 associated with the identified person. In certain cases, the vector generator 372 may retrieve the speaker feature vector 325 from the data store 374. The speaker feature vector 325 is then passed to the speech processing module 330 for use as described with reference to FIG. 2.

In the example of FIG. 3, the vector generator 372 may obtain the speaker feature vector 325 in different ways depending on a set of operating parameters. In one case, the operating parameters comprise a parameter that indicates whether a particular number of speaker feature vectors 325 have been computed for a particular identified user (e.g., as identified by the user identifier 376). In one case, a threshold is defined that is associated with a number of previously computed speaker feature vectors. If this threshold is 1, then the speaker feature vector 325 may be computed for a first utterance and then stored in the data store 374; for subsequent utterances the speaker feature vector 325 may be retrieved from the data store 374. If the threshold is greater than 1, such as n, then *n* speaker feature vectors 325 may be generated and then the *(n*+*1)*th speaker feature vector 325 may be obtained as a composite function of the previous n speaker feature vectors 325 as retrieved from the data store 374. The composite function may comprise an average or an interpolation. In one case, once the *(n*+*1)*th speaker feature vector 325 is computed, it is used as a static speaker feature vector for a configurable number of future utterances.

In the example above, the use of the data store 374 to save a speaker feature vector 325 may reduce run-time computational demands for an in-vehicle system. For example, the data store 374 may comprise a local data storage device within the vehicle, and as such a speaker feature vector 325 may be retrieved for a particular user from the data store 374 rather than being computed by the vector generator 372.

In one case, at least one computation function used by the vector generator 372 may involve a cloud processing resource (e.g., a remote server computing device). In this case, in situations of limited connectivity between a vehicle and a cloud processing resource, the speaker feature vector 325 may be retrieved as a static vector from local storage rather than relying on any functionality that is provided by the cloud processing resource.

In one case, the speaker preprocessing module 320 may be configured to generate a user profile for each newly recognized person within the vehicle. For example, prior to, or on detection of an utterance, e.g., as captured by an audio capture device, the face recognition module 370 may attempt to match image data 345 against previously observed faces. If no match is found, then the face recognition module 370 may generate (or instruct the generation of) a new user identifier 376. In one case, a component of the speaker preprocessing module 320, such as the face recognition module 370 or the vector generator 372, may be configured to generate a new user profile if no match is found, where the new user profile may be indexed using the new user identifier. Speaker feature vectors 325 may then be associated with the new user profile, and the new user profile may be stored in the data store 374 ready to be retrieved when future matches are made by the face recognition module 370. As such an in-vehicle image capture device may be used for facial recognition to select a user-specific speech recognition profile. User profiles may be calibrated through an enrollment process, such as when a driver first uses the car, or may be learnt based on data collected during use.

In one case, the speaker processing module 320 may be configured to perform a reset of data store 374. At manufacturing time, device 374 may be empty of user profile information. During usage, new user profiles may be created and added to the data store 374 as described above. A user may command a reset of stored user identifiers. In some cases, the reset may be performed only during professional service, such as when an automobile is maintained at a service shop or sold through a certified dealer. In some cases, the reset may be performed at any time through a user provided password.

In an example where the vehicle comprises multiple image capture devices and multiple audio capture devices, the speaker preprocessing module 320 may provide further functionality to determine an appropriate facial area from one or more captured images. In one case, audio data from a plurality of audio capture devices may be processed to determine a closest audio capture device associated with the utterance. In this case, a closest image capture device associated with the determined closest audio capture device may be selected and image data 345 from this device may be sent to the face recognition module 370. In another case, the face recognition module 370 may be configured to receive multiple images from multiple image capture devices, where each image comprises an associated flag to indicate whether it is to be used to identify a currently speaking user. In this manner, the speech processing apparatus 300 of FIG. 3 may be used to identify a speaker from a plurality of people within a vehicle and configure the speech processing module 330 to the specific characteristics of that speaker. This may also improve speech processing within a vehicle in a case where multiple people are speaking within a constrained interior of the vehicle.

### i-vectors

In certain examples described herein, a speaker feature vector, such as speaker feature vector 225 or 325 may comprise data that is generated based on the audio data, e.g., audio data 255 or 355 in FIGS. 2 and 3. This is shown by the dashed line in FIG. 3. In one case, at least a portion of the speaker feature vector may comprise a vector generated based on factor analysis. In this case, an utterance may be represented as a vector *M* that is a linear function of one or more factors. The factors may be combined in a linear and/or a non-linear model. One of these factors may comprise a speaker and session independent supervector *m.* This may be based on a Universal Background Model (UBM). Another one of these factors may comprise a speaker-dependent vector w. This latter factor may also be dependent on a channel or session or a further factor may be provided that is dependent on the channel and/or the session. In one case, the factor analysis is performed using a Gaussian Mixture Model (GMM). In a simple case, a speaker utterance may be represented by a supervector *M* that is determined as *M* = *m* + *Tw,* where *T* is a matrix defining at least a speaker subspace. The speaker-dependent vector w may have a plurality of elements with floating point values. The speaker feature vector in this case may be based on the speaker-dependent vector w. One method of computing w, which is sometimes referred to as an "i-vector", is described by Najim Dehak, Patrick Kenny, Reda Dehak, Pierre Dumouchel, and Pierre Ouellet, in their paper "Front-End Factor Analysis For Speaker Verification", published in the IEEE Transactions On Audio, Speech And Language Processing 19, no.4, pages 788-798, in 2010. In certain examples, at least a portion of the speaker feature vector comprises at least portions of an i-vector. The i-vector may be seen to be a speaker dependent vector that is determined for an utterance from the audio data.

In the example of FIG. 3, the vector generator 372 may compute an i-vector for one or more utterances. In a case, where there are no speaker feature vectors stored within data store 374, an i-vector may be computed by the vector generator 372 based on one or more frames of audio data for an utterance 355. In this example, the vector generator 372 may repeat the per-utterance (e.g., per voice query) i-vector computation until a threshold number of computations have been performed for a particular user, e.g., as identified using the user identifier 376 determined from the face recognition module 370. In this case, after a particular user has been identified based on the image data 345, the i-vector for the user for each utterance is stored in the data store 374. The i-vector is also used to output the speaker feature vector 325. Once the threshold number of computations have been performed, e.g., 100 or so i-vectors have been computed, the vector generator 372 may be configured to compute a profile for the particular user using the i-vectors that are stored in the data store 374. The profile may use the user identifier 376 as an index and may comprise a static (e.g., non-changing) i-vector that is computed as a composite function of the stored i-vectors. The vector generator 372 may be configured to compute the profile on receipt of a *(n*+*1)*th query or as part of a background or periodic function. In one case, a static i-vector may be computed as an average of the stored i-vectors. Once the profile is generated by the vector generator 372 and stored in the data store 374, e.g., using the user identifier to associate the profile with the particular user, then it may be retrieved from the data store 374 and used for future utterance parsing in place of computation of the i-vector for the user. This can reduce the computation overhead of generating the speaker feature vector and reduce i-vector variance.

### x vectors

In certain examples, the speaker feature vector, such as speaker feature vector 225 or 325 may be computed using a neural network architecture. For example, in one case, the vector generator 372 of the speaker preprocessing module 320 of FIG. 3 may comprise a neural network architecture. In this case, the vector generator 372 may compute at least a portion of the speaker feature vector by reducing the dimensionality of the audio data 355. For example, the vector generator 372 may comprise one or more Deep Neural Network layers that are configured to receive one or more frames of audio data 355 and output a fixed length vector output (e.g., one vector per language). One or more pooling, non-linear functions and SoftMax layers may also be provided. In one case, the speaker feature vector may be generated based on an x-vector as described by David Snyder, Daniel Garcia-Romero, Alan McCree, Gregory Sell, Daniel Povey, and Sanjeev Khudanpur in the paper "Spoken Language Recognition using X-vectors" published in Odyssey in 2018 (pp. 105-111).

An x-vector may be used in a similar manner to the i-vector described above, and the above approaches apply to a speaker feature vector generated using x-vectors as well as i-vectors. In one case, both i-vectors and x-vectors may be determined, and the speaker feature vector may comprise a supervector comprising elements from both an i-vector and an x-vector. As both i-vectors and x-vectors comprise numeric elements, e.g., typically floating-point values and/or values normalized within a given range, that may be combined by concatenation or a weighted sum. In this case, the data store 374 may comprise stored values for one or more of i-vectors and x-vectors, whereby
once a threshold is reached a static value is computed and stored with a particular user identifier for future retrieval. In one case, interpolation may be used to determine a speaker feature vector from one or more i-vectors and x-vectors. In one case, interpolation may be performed by averaging different speaker feature vectors from the same vector source.

In the case where the speech processing module comprises a neural acoustic model, a fixed-length format for the speaker feature vector may be defined. The neural acoustic model may then be trained using the defined speaker feature vector, e.g., as determined by the speaker preprocessing module 220 or 320 in FIGS. 2 and 3. If the speaker feature vector comprises elements derived from one or more of i-vector and x-vector computations, then the neural acoustic model may "learn" to configure acoustic processing based on speaker specific information that is embodied or embedded within the speaker feature vector. This may increase acoustic processing accuracy, especially within a vehicle such as a motor vehicle. In this case, the image data provides a mechanism to quickly associate a particular user with computed or stored vector elements.

### Example Speech Processing Module

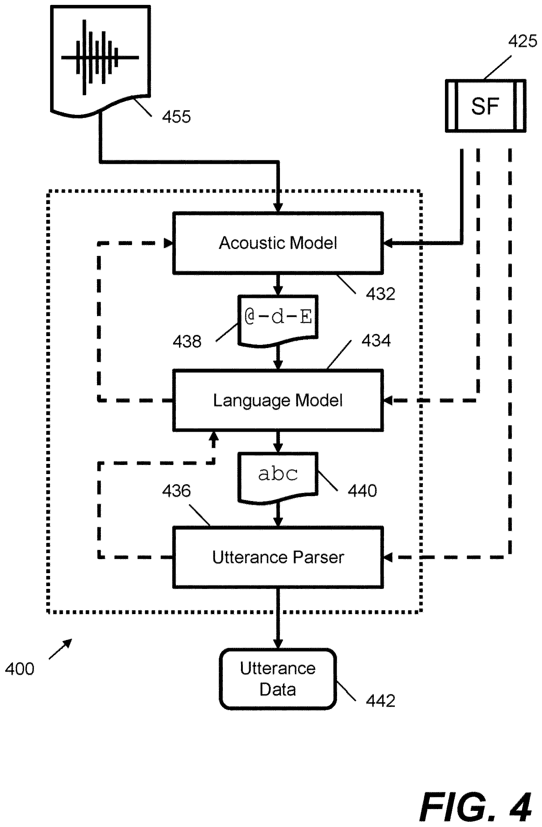

FIG. 4 shows an example speech processing module 400. The speech processing module 400 may be used to implement the speech processing modules 130, 230 or 330 in FIGS. 1, 2 and 3. In other examples, other speech processing module configurations may be used.

As per the previous examples, the speech processing module 400 receives audio data 455 and a speaker feature vector 425. The audio data 455 and the speaker feature vector 425 may be configured as per any of the examples described herein. In the example of FIG. 4, the speech processing module 400 comprises an acoustic model 432, a language model 434 and an utterance parser 436. As described previously, the acoustic model 432 generates phoneme data 438. Phoneme data may comprise one or more predicted sequences of phoneme symbols or sub-symbols, or other forms of proto-language units. In certain cases, multiple predicted sequences may be generated together with probability data indicating a likelihood of particular symbols or sub-symbols at each time step.

The phoneme data 438 is communicated to the language model 434, e.g., the acoustic model 432 is communicatively coupled to the language model 434. The language model 434 is configured to receive the phoneme data 438 and generate a transcription 440. The transcription 440 may comprise text data, e.g., a sequence of characters, word-portions (e.g., stems, endings and the like) or words. The characters, word-portions and words may be selected from a predefined dictionary, e.g., a predefined set of possible outputs at each time step. In certain cases, the phoneme data 438 may be processed before passing to the language model 434 or may be pre-processed by the language model 434. For example, beam forming may be applied to probability distributions (e.g. for phonemes) that are output from the acoustic model 432.

The language model 434 is communicatively coupled to an utterance parser 436. The utterance parser 436 receives the transcription 440 and uses this to parse the utterance. In certain cases, the utterance parser 436 generates utterance data 442 as a result of parsing the utterance. The utterance parser 436 may be configured to determine a command, and/or command data, associated with the utterance based on the transcription. In one case, the language model 434 may generate multiple possible text sequences, e.g., with probability information for units within the text, and the utterance parser 436 may be configured to determine a finalized text output, e.g., in the form of ASCII or Unicode character encodings, or a spoken command or command data. If the transcription 440 is determined to contain a voice command, the utterance parser 436 may be configured to execute, or instruct execution of, the command according to the command data. This may result in response data that is output as utterance data 442. Utterance data 442 may comprise a response to be relayed to the person speaking the utterance, e.g., command instructions to provide an output on the dashboard 108 and/or via an audio system of the vehicle. In certain cases, the language model 434 may comprise a statistical language model and the utterance parser 436 may comprise a separate "meta" language model configured to rescore alternate hypotheses as output by the statistical language model. This may be via an ensemble model that uses voting to determine a final output, e.g., a final transcription or command identification.

FIG. 4 shows with a solid line an example where the acoustic model 432 receives the speaker feature vector 425 and the audio data 455 as an input and uses the input to generate the phoneme data 438. For example, the acoustic model 432 may comprise a neural network architecture (including hybrid models with other non-neural components) and the speaker feature vector 425 and the audio data 455 may be provided as an input to the neural network architecture, wherein the phoneme data 438 is generated based on an output of the neural network architecture.

The dashed lines in FIG. 4 show additional couplings that may be configured in certain implementations. In a first case, the speaker feature vector 425 may be accessed by one or more of the language model 434 and the utterance parser 436. For example, if the language model 434 and the utterance parser 436 also comprise respective neural network architectures, these architectures may be configured to receive the speaker feature vector 425 as an additional input, e.g., in addition to the phoneme data 438 and the transcription 440 respectively. If the utterance data 442 comprises a command identifier and one or more command parameters, the complete speech processing module 400 may be trained in an end-to-end manner given a training set with ground truth outputs and training samples for the audio data 455 and the speaker feature vector 425.

In a second implementation, the speech processing module 400 of FIG. 4 may comprise one or more recurrent connections. In one case, the acoustic model may comprise recurrent models, e.g. LSTMs. In other cases, there may be feedback between modules. In FIG. 4 there is a dashed line indicating a first recurrent coupling between the utterance parser 436 and the language model 434 and a dashed line indicating a second recurrent coupling between the language model 434 and the acoustic model 432. In this second case, a current state of the utterance parser 436 may be used to configure a future prediction of the language model 434 and a current state of the language model 434 may be used to configure a future prediction of the acoustic model 432. The recurrent coupling may be omitted in certain cases to simplify the processing pipeline and allow for easier training. In one case, the recurrent coupling may be used to compute an attention or weighting vector that is applied at a next time step.

### Neural Speaker Preprocessing Module

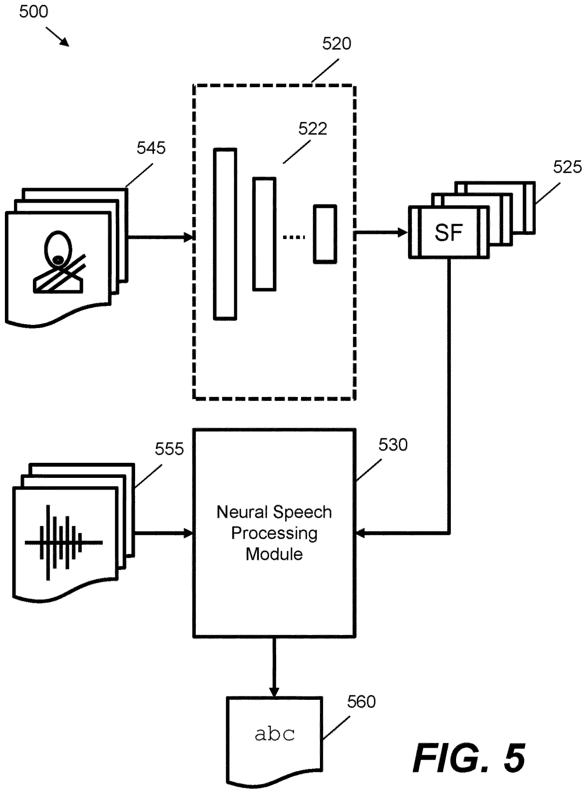

FIG. 5 shows an example speech processing apparatus 500 that uses a neural speaker preprocessing module 520 and a neural speech processing module 530. In FIG. 5, the speaker preprocessing module 520, which may implement modules 220 or 320 in FIGS. 2 and 3, comprises a neural network architecture 522. In FIG. 5, the neural network architecture 522 is configured to receive image data 545. In other cases, the neural network architecture 522 may also receive audio data, such as audio data 355, e.g., as shown by the dashed pathway in FIG. 3. In these other cases, the vector generator 372 of FIG. 3 may comprise the neural network architecture 522.

In FIG. 5, the neural network architecture 522 comprises at least a convolutional neural architecture. In certain architectures there may be one or more feed-forward neural network layers between a last convolutional neural network layer and an output layer of the neural network architecture 522. The neural network architecture 522 may comprise an adapted form of the AlexNet, VGGNet, GoogLeNet, or ResNet architectures. The neural network architecture 522 may be replaced in a modular manner as more accurate architectures become available.

The neural network architecture 522 outputs at least one speaker feature vector 525, where the speaker feature vector may be derived and/or used as described in any of the other examples. FIG. 5 shows a case where the image data 545 comprises a plurality of frames, e.g., from a video camera, wherein the frames feature a facial area of a person. In this case, a plurality of speaker feature vectors 525 may be computed using the neural network architecture, e.g., one for each input frame of image data. In other cases, there may be a many-to-one relationship between frames of input data and a speaker feature vector. It should be noted that using recurrent neural network systems, samples of the input image data 545 and the output speaker feature vectors 525 need not be temporally synchronized, e.g., a recurrent neural network architecture may act as an encoder (or integrator) over time. In one case, the neural network architecture 522 may be configured to generate an x-vector as described above. In one case, an x-vector generator may be configured to receive image data 545, to process this image data using a convolutional neural network architecture and then to combine the output of the convolutional neural network architecture with an audio-based x-vector. In one case, known x-vector configurations may be extended to receive image data as well as audio data and to generate a single speaker feature vector that embodies information from both modal pathways.

In FIG. 5, the neural speech processing module 530 is a speech processing module such as one of modules 230, 330, 400 that comprises a neural network architecture. For example, the neural speech processing module 530 may comprise a hybrid DNN-HMM/GMM system and/or a fully neural CTC system. In FIG. 5, the neural speech processing module 530 receives frames of audio data 555 as input. Each frame may correspond to a temporal window, e.g., a window of *w* ms that is passed over time series data from an audio capture device. The frames of audio data 555 may be asynchronous with the frames of image data 545, e.g., it is likely that the frames of audio data 555 will have a higher frame rate. Again, holding mechanisms and/or recurrent neural network architectures may be applied within the neural speech processing module 530 to provide temporal encoding and/or integration of samples. As in other examples, the neural speech processing module 530 is configured to process the frames of audio data 555 and the speaker feature vectors 525 to generate a set of linguistic features. As discussed herein, reference to a neural network architecture includes one or more neural network layers (in one case, "deep" architectures with one or more hidden layers and a plurality of layers), wherein each layer may be separated from a following layer by non-linearities such as *tanh* units or REctified Linear Units (RELUs). Other functions may be embodied within the layers including pooling operations.

The neural speech processing module 530 may comprise one or more components as shown in FIG. 4. For example, the neural speech processing module 530 may comprise an acoustic model comprising at least one neural network. In the example of FIG. 5, the neural network architectures of the neural speaker preprocessing module 520 and the neural speech processing module 530 may be jointly trained. In this case, a training set may comprise frames of image data 545, frames of audio data 555 and ground truth linguistic features (e.g., ground truth phoneme sequences, text transcriptions or voice command classifications and command parameter values). Both the neural speaker preprocessing module 520 and the neural speech processing module 530 may be trained in an end-to-end manner using this training set. In this case, errors between predicted and ground truth linguistic features may be back propagated through the neural speech processing module 530 and then the neural speaker preprocessing module 520. Parameters for both neural network architectures may then be determined using gradient descent approaches. In this manner, the neural network architecture 522 of the neural speaker preprocessing module 520 may "learn" parameter values (such as values for weights and/or biases for one or more neural network layers) that generate one or more speaker feature vectors 525 that improve at least acoustic processing in an in-vehicle environment, where the neural speaker preprocessing module 520 learns to extract features from the facial area of a person that help improve the accuracy of the output linguistic features.

Training of neural network architectures as described herein is typically not performed on in-vehicle devices (although this could be performed if desired). In one case, training may be performed on a computing device with access to substantive processing resources, such as a server computer device with multiple processing units (whether CPUs, GPUs, Field Programmable Gate Arrays - FPGAs - or other dedicated processor architectures) and large memory portions to hold batches of training data. In certain cases, training may be performed using a coupled accelerator device, e.g., a couplable FPGA or GPU-based device. In certain cases, trained parameters may be communicated from a remote server device to an embedded system within the vehicle, e.g. as part of an over-the-air update.

### Example of Acoustic Model Selection

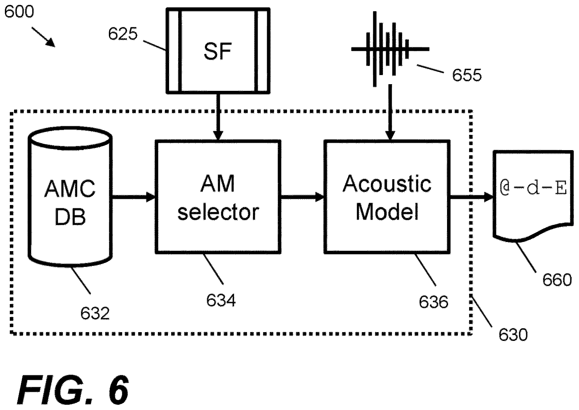

FIG. 6 shows an example speech processing module 600 that uses a speaker feature vector 625 to configure an acoustic model. The speech processing module 600 may be used to implement, at least in part, one of the speech processing modules described in other examples. In FIG. 6, the speech processing module 600 comprises a database of acoustic model configurations 632, an acoustic model selector 634 and an acoustic model instance 636. The database of acoustic model configurations 632 stores a number of parameters to configure an acoustic model. In this example, the acoustic model instance 636 may comprise a general acoustic model that is instantiated (e.g., configured or calibrated) using a particular set of parameter values from the database of acoustic model configurations 632. For example, the database of acoustic model configurations 636 may store a plurality of acoustic model configurations. Each acoustic model configuration may be associated with a different user, including one or more default acoustic model configurations that are used if a user is not detected or a user is detected but not specifically recognized.

In certain cases, the speaker feature vector 625 may be used to represent a particular regional accent instead of (or as well as) a particular user. This may be useful in countries such as India where there may be many different regional accents. In this case, the speaker feature vector 625 may be used to dynamically load acoustic models based on an accent recognition that is performed using the speaker feature vector 625. For example, this may be possible in the case that the speaker feature vector 625 comprises an x vector as described above. This may be useful in a case with a plurality of accent models (e.g. multiple acoustic model configurations for each accent) that are stored within a memory of the vehicle. This may then allow a plurality of separately trained accent models to be used.

In one case, the speaker feature vector 625 may comprise a classification of a person within a vehicle. For example, the speaker feature vector 625 may be derived from the user identifier 376 output by the face recognition module 370 in FIG. 3. In another case, the speaker feature vector 625 may comprise a classification and/or set of probabilities output by a neural speaker preprocessing module such as module 520 in FIG. 5. In the latter case, the neural speaker preprocessing module may comprise a softmax layer that outputs "probabilities" for a set of potential users (including a classification for "unrecognized"). In this case, one or more frames of input image data 545 may result in a single speaker feature vector 525.

In FIG. 6, the acoustic model selector 634 receives the speaker feature vector 625, e.g., from a speaker preprocessing module, and selects an acoustic model configuration from the database of acoustic model configurations 632. This may operate in a similar manner to the example of FIG. 3 described above. If the speaker feature vector 625 comprises a set of user classifications then the acoustic model selector 634 may select an acoustic model configuration based on these classifications, e.g., by sampling a probability vector and/or selecting a largest probability value as a determined person. Parameter values relating to a selected configuration may be retrieved from the database of acoustic model configurations 632 and used to instantiate the acoustic model instance 636. Hence, different acoustic model instances may be used for different identified users within the vehicle.

In FIG. 6, the acoustic model instance 636, e.g., as configured by the acoustic model selector 634 using a configuration retrieved from the database of acoustic model configurations 632, also receives audio data 655. The acoustic model instance 636 is configured to generate phoneme data 660 for use in parsing an utterance associated with the audio data 655 (e.g., featured within the audio data 655). The phoneme data 660 may comprise a sequence of phoneme symbols, e.g., from a predefined alphabet or dictionary. Hence, in the example of FIG. 6, the acoustic model selector 634 selects an acoustic model configuration from the database 632 based on a speaker feature vector, and the acoustic model configuration is used to instantiate an acoustic model instance 636 to process the audio data 655.

The acoustic model instance 636 may comprise both neural and non-neural architectures. In one case, the acoustic model instance 636 may comprise a non-neural model. For example, the acoustic model instance 636 may comprise a statistical model. The statistical model may use symbol frequencies and/or probabilities. In one case, the statistical model may comprise a Bayesian model, such as a Bayesian network or classifier. In these cases, the acoustic model configurations may comprise particular sets of symbol frequencies and/or prior probabilities that have been measured in different environments. The acoustic model selector 634 thus allows a particular source (e.g., person or user) of an utterance to be determined based on both visual (and in certain cases audio) information, which may provide improvements over using audio data 655 on its own to generate phoneme sequence 660.

In another case, the acoustic model instance 636 may comprise a neural model. In this case, the acoustic model selector 634 and the acoustic model instance 636 may comprise neural network architectures. In this case, the database of acoustic model configurations 632 may be omitted and the acoustic model selector 634 may supply a vector input to the acoustic model instance 636 to configure the instance. In this case, training data may be constructed from image data used to generate the speaker feature vector 625, audio data 655, and ground truth sets of phoneme outputs 660. Such a system may be jointly trained.

### Example Image Preprocessing

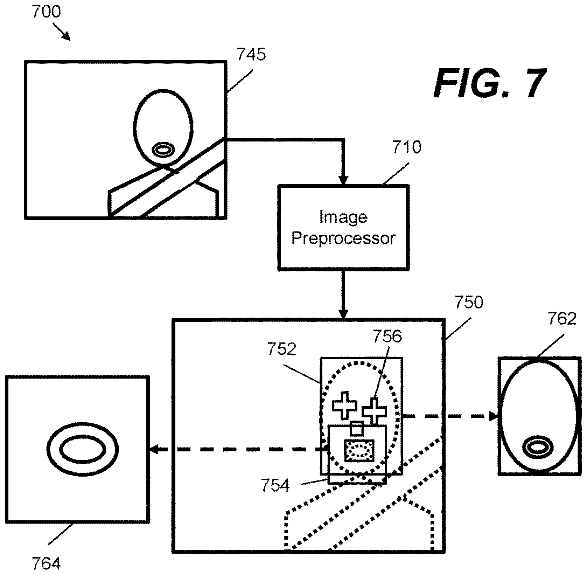

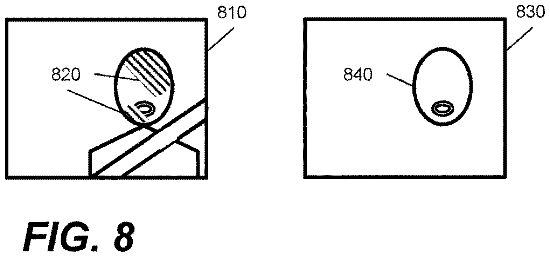

FIGS. 7 and 8 show example image preprocessing operations that may be applied to image data obtained from within a vehicle, such as a motor vehicle. FIG. 7 shows an example image preprocessing pipeline 700 comprising an image preprocessor 710. The image preprocessor 710 may comprise any combination of hardware and software to implement functionality as described herein. In one case, the image preprocessor 710 may comprise hardware components that form part of image capture circuitry that is coupled to one or more image capture devices; in another case, the image preprocessor 710 may be implemented by computer program code (such as firmware) that is executed by a processor of an in-vehicle control system. In one case, the image preprocessor 710 may be implemented as part of the speaker preprocessing module described in examples herein; in other cases, the image preprocessor 710 may be communicatively coupled to the speaker preprocessing module.

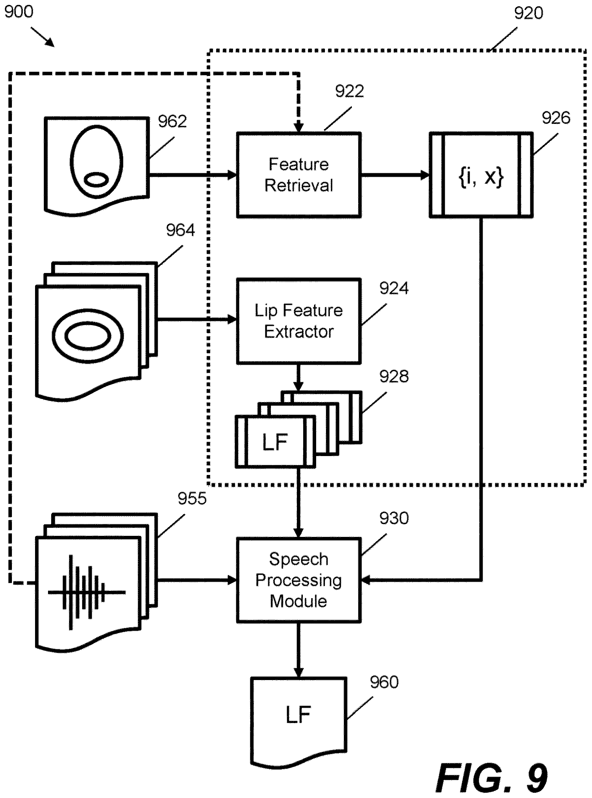

In FIG. 7, the image preprocessor 710 receives image data 745, such as an image from image capture device 110 in FIG. 1A. The image preprocessor 710 processes the image data to extract one or more portions of the image data. FIG. 7 shows an output 750 of the image preprocessor 710. The output 750 may comprise one or more image annotations, e.g., metadata associated with one or more pixels of the image data 745 and/or features defined using pixel co-ordinates within the image data 745. In the example of FIG. 7, the image preprocessor 710 performs face detection on the image data 745 to determine a first image area 752. The first image area 752 may be cropped and extracted as image portion 762. The first image area 752 may be defined using a bounding box (e.g., at least top left and bottom right (*x, y*) pixel co-ordinates for a rectangular area). The face detection may be a pre-cursor step for face recognition, e.g., face detection may determine a face area within the image data 745 and face recognition may classify the face area as belonging to a given person (e.g., within a set of people). In the example of FIG. 7, the image preprocessor 710 also identifies a mouth area within the image data 745 to determine a second image area 754. The second image area 754 may be cropped and extracted as image portion 764. The second image area 754 may also be defined using a bounding box. In one case, the first and second image areas 752, 754 may be determined in relation to a set of detected facial features 756. These facial features 756 may comprise one or more of eyes, nose and mouth areas. Detection of facial features 756 and/or one or more of the first and second areas 752, 754 may use neural network approaches, or known face detection algorithms such as the Viola-Jones face detection algorithm as described in "Robust Real-Time Face Detection", by Paul Viola and Michael J Jones, as published in the International Journal of Computer Vision 57, pp. 137-154, Netherlands, 2004. In certain examples, one or more of the first and second image areas 752, 754 are used by the speaker preprocessing modules described herein to obtain a speaker feature vector. For example, the first image area 752 may provide input image data for the face recognition module 370 in FIG. 3 (i.e. be used to supply image data 345). An example that uses the second image area 754 is described with reference to FIG. 9 below.

FIG. 8 shows an effect of using an image capture device configured to capture electromagnetic radiation having infra-red wavelengths. In certain cases, image data 810 obtained by an image capture device such as image capture device 110 in FIG. 1A, may be impacted by low light situations. In FIG. 8, the image data 810 contains areas of shadow 820 that partially obscure the facial area (e.g., including the first and second image areas 752, 754 in FIG. 7). In these cases,
an image capture device that is configured to capture electromagnetic radiation having infra-red wavelengths may be used. This may comprise providing adaptations to the image capture device 110 in FIG. 1A (e.g., such as removable filters in hardware and/or software) and/or providing a Near-Infra-Red (NIR) camera. An output from such an image capture device is shown in schematically as image data 830. In image data 830, the facial area 840 is reliably captured. In this case, the image data 830 provides a representation that is illumination invariant, e.g., that is not affected by changes in illumination, such as those that may occur in night driving. In these cases, the image data 830 may be that provided to the image preprocessor 710 and/or the speaker preprocessing modules as described herein.

### Lip Reading Examples

In certain examples, the speaker feature vector described herein may comprise at least a set of elements that represent mouth or lip features of a person. In these cases, the speaker feature vector may be speaker dependent as it changes based on the content of image data featuring the mouth or lip area of a person. In the example of FIG. 5, the neural speaker preprocessing module 520 may encode lip or mouth features that are used to generate the speaker feature vectors 525. These may be used to improve the performance of the speech processing module 530.

FIG. 9 shows another example speech processing apparatus 900 that uses lip features to form at least part of a speaker feature vector. As with previous examples, the speech processing apparatus 900 comprises a speaker preprocessing module 920 and a speech processing module 930. The speech processing module 930 receives audio data 955 (in this case, frames of audio data) and outputs linguistic features 960. The speech processing module 930 may be configured as per other examples described herein.

In FIG. 9, the speaker preprocessing module 920 is configured to receive two different sources of image data. In this example, the speaker preprocessing module 920 receives a first set of image data 962 that features a facial area of a person. This may comprise the first image area 762 as extracted by the image preprocessor 710 in FIG. 7. The speaker preprocessing module 920 also receives a second set of image data 964 that features a lip or mouth area of a person. This may comprise the second image area 764 as extracted by the image preprocessor 710 in FIG. 7. The second set of image data 964 may be relatively small, e.g., a small cropped portion of a larger image obtained using the image capture device 110 of FIG. 1A. In other examples, the first and second sets of image data 962, 964 may not be cropped and may comprise copies of a set of images from an image capture device. Different configurations are possible - cropping the image data may provide improvements in processing speed and training, but neural network architectures may be trained to operate on a wide variety of image sizes.

The speaker preprocessing module 920 comprises two components in FIG. 9: a feature retrieval component 922 and a lip feature extractor 924. The lip feature extractor 924 forms part of a lip-reading module. The feature retrieval component 922 may be configured in a similar manner to the speaker preprocessing module 320 in FIG. 3. In this example, the feature retrieval component 922 receive the first set of image data 962 and outputs a vector portion 926 that consists of one or more of an i-vector and an x-vector (e.g., as described above). In one case, the feature retrieval component 922 receives a single image per utterance whereas the lip feature extractor 924 and the speech processing module 930 receive a plurality of frames over the time of the utterance. In one case, if a facial recognition performed by the feature retrieval component 922 has a confidence value that is below a threshold, the first set of image data 962 may be updated (e.g., by using another/current frame of video) and the facial recognition reapplied until a confidence value meets a threshold (or a predefined number of attempts is exceeded). As described with reference to FIG. 3, the vector portion 926 may be computed based on the audio data 955 for a first number of utterances, and then retrieved as a static value from memory once the first number of utterances is exceeded.

The lip feature extractor 924 receives the second set of image data 964. The second set of image data 964 may comprise cropped frames of image data that focus on a mouth or lip area. The lip feature extractor 924 may receive the second set of image data 964 at a frame rate of an image capture device and/or at a subsampled frame rate (e.g., every 2 frames). The lip feature extractor 924 outputs a set of vector portions 928. These vector portions 928 may comprise an output of an encoder that comprises a neural network architecture. The lip feature extractor 924 may comprise a convolutional neural network architecture to provide a fixed-length vector output (e.g., 256 or 512 elements having integer or floating-point values). The lip feature extractor 924 may output a vector portion for each input frame of image data 964 and/or may encode features over time steps using a recurrent neural network architecture (e.g., using a Long Short Term Memory - LSTM - or Gated Recurrent Unit - GRU) or a "transformer" architecture. In the latter case, an output of the lip feature extractor 924 may comprise one or more of a hidden state of a recurrent neural network and an output of the recurrent neural network. One example implementation for the lip feature extractor 924 is described by Chung, Joon Son, et al. in "Lip reading sentences in the wild", 2017 IEEE Conference on Computer Vision and Pattern Recognition (CVPR).

In FIG. 9, the speech processing module 930 receives the vector portions 926 from the feature retrieval component 922 and the vector portions 928 from the lip feature extractor 924 as inputs. In one case, the speaker preprocessing module 920 may combine the vector portions 926, 928 into a single speaker feature vector; in another case, the speech processing module 930 may receive the vector portions 926, 928 separately yet treat the vector portions as different portions of a speaker feature vector. The vector portions 926, 928 may be combined into a single speaker feature vector by one or more of the speaker preprocessing module 920 and the speech processing module 920 using, for example, concatenation or more complex attention-based mechanisms. If the sample rates of one or more of the vector portions 926, the vector portions 928 and the frames of audio data 955 differ then a common sample rate may be implemented by, for example, a receive-and-hold architecture (where values that more vary more slower are held constant at a given value until a new sample values are received), a recurrent temporal encoding (e.g., using LSTMs or GRUs as above) or an attention-based system where an attention weighting vector changes per time step.

The speech processing module 930 may be configured to use the vector portions 926, 928 as described in other examples set out herein, e.g., these may be input as a speaker feature vector into a neural acoustic model along with the audio data 955. In an example where the speech processing module 930 comprises a neural acoustic model, a training set may be generated based on input video from an image capture device, input audio from an audio capture device and ground-truth linguistic features (e.g., the image preprocessor 710 in FIG. 7 may be used to obtain the first and second sets of image data 962, 964 from raw input video).

In certain examples, the vector portions 926 may also include an additional set of elements whose values are derived from an encoding of the first set of image data 962, e.g., using a neural network architecture such as 522 in FIG. 5. These additional elements may represent a "face encoding" while the vector portions 928 may represent a "lip encoding". The face encoding may remain static for the utterance whereas the lip encoding may change during, or comprise multiple "frames" for, for the utterance. Although FIG. 9 shows an example that uses both a lip feature extractor 924 and a feature retrieval component 922, in one example the feature retrieval component 922 may be omitted. In this latter example, a lip-reading system for in-vehicle use may be used in a manner similar to the speech processing apparatus 500 of FIG. 5.

### Example Motor Vehicle

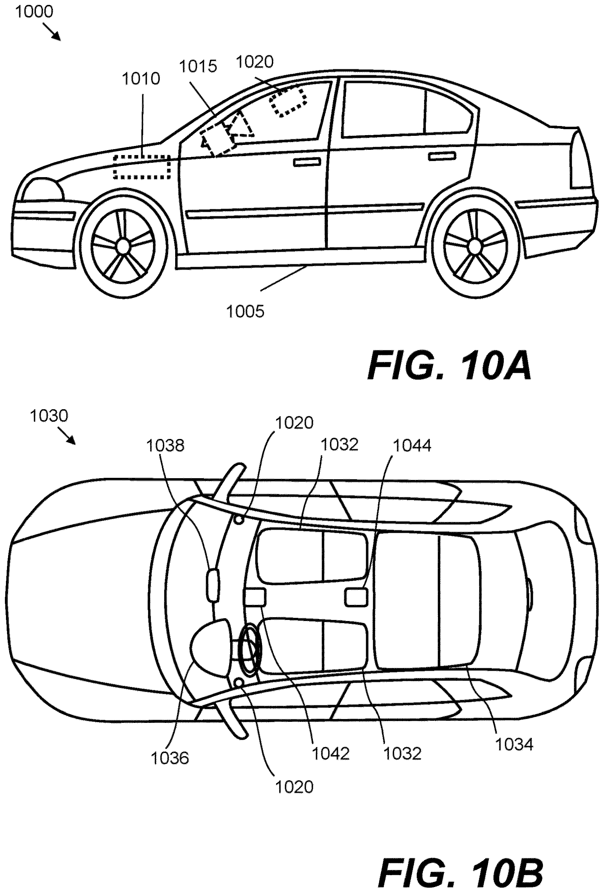

FIGS. 10A and 10B show an example where the vehicle as described herein is a motor vehicle. FIG. 10A shows a side view 1000 of an automobile 1005. The automobile 1005 comprises a control unit 1010 for controlling components of the automobile 1005. The components of the speech processing apparatus 120 as shown in FIG. 1B (as well as the other examples) may be incorporated into this control unit 1010. In other cases, the components of the speech processing apparatus 120 may be implemented as a separate unit with an option of connectivity with the control unit 1010. The automobile 1005 also comprises at least one image capture device 1015. For example, the at least one image capture device 1015 may comprise the image capture device 110 shown in FIG. 1A. In this example, the at least one image capture device 1015 may be communicatively coupled to, and controlled by, the control unit 1010. In other examples, the at least one image capture device 1015 is in communication with the control unit 1010 and remotely controlled. As well as the functions described herein, the at least one image capture device 1015 may be used for video communications, e.g., voice over Internet Protocol calls with video data, environmental monitoring, driver alertness monitoring etc. FIG. 10A also shows at least one audio capture device in the form of side-mounted microphones 1020. These may implement the audio capture device 116 shown in FIG. 1A.

The image capture devices described herein may comprise one or more still or video cameras that are configured to capture frames of image data on command or at a predefined sampling rate. Image capture devices may provide coverage of both the front and rear of the vehicle interior. In one case, a predefined sampling rate may be less than a frame rate for full resolution video, e.g., a video stream may be captured at 30 frames per second, but a sampling rate of the image capture device may capture at this rate, or at a lower rate such as 1 frame per second. An image capture device may capture one or more frames of image data having one or more color channels (e.g., RGB or YUV as described above). In certain cases, aspects of an image capture device, such as the frame rate, frame size and resolution, number of color channels and sample format may be configurable. The frames of image data may be downsampled in certain cases, e.g., video capture device that captures video at a "4K" resolution of 3840 x 2160 may be downsampled to 640 x 480 or below. Alternatively, for low-cost embedded devices, a low-resolution image capture device may be used, capturing frames of image data at 320 x 240 or below. In certain cases, even cheap low-resolution image capture devices may provide enough visual information for speech processing to be improved. As before, an image capture device may also include image pre-processing and/or filtering components (e.g., contrast adjustment, noise removal, color adjustment, cropping, etc.). In certain cases, low latency and/or high frame rate image cameras that meet more strict Automotive Safety Integrity Level (ASIL) levels for the ISO 26262 automotive safety standard are available. Aside from their safety benefits, they can improve lip reading accuracy by providing higher temporal information. That can be useful to recurrent neural networks for more accurate feature probability estimation.

FIG. 10B shows an overhead view 1030 of automobile 1005. It comprises front seats 1032 and rear seat 1034 for holding passengers in an orientation for front-mounted microphones for speech capture. The automobile 1005 comprises a driver visual console 1036 with safety-critical display information. The driver visual console 1036 may comprise part of the dashboard 108 as shown in FIG. 1A. The automobile 1005 further comprises a general console 1038 with navigation, entertainment, and climate control functions. The control unit 1010 may control the general console 1038 and may implement a local speech processing module such as 120 in FIG. 1A and a wireless network communication module. The wireless network communication module may transmit one or more of image data, audio data and speaker feature vectors that are generated by the control unit 1010 to a remote server for processing. The automobile 1005 further comprises the side-mounted microphones 1020, a front overhead multi-microphone speech capture unit 1042, and a rear overhead multi-microphone speech capture unit 1044. The front and rear speech capture units 1042, 1044 provide additional audio capture devices for capturing speech audio, canceling noise, and identifying the location of speakers. In one case, the front and rear speech capture units 1042, 1044 may also include additional image capture devices to capture image data featuring each of the passengers of the vehicle.

In the example of FIG. 10B, any one or more of the microphones and speech capture units 1020, 1042 and 1044 may provide audio data to an audio interface such as 140 in FIG. 1B. The microphone or array of microphones may be configured to capture or record audio samples at a predefined sampling rate. In certain cases, aspects of each audio capture device, such as the sampling rate, bit resolution, number of channels and sample format may be configurable. Captured audio data may be Pulse Code Modulated. Any audio capture device may also include audio pre-processing and/or filtering components (e.g., contrast adjustment, noise removal, etc.). Similarly, any one or more of the image capture devices may provide image data to an image interface such as 150 in FIG. 1B and may also include video pre-processing and/or filtering components (e.g., contrast adjustment, noise removal, etc.).

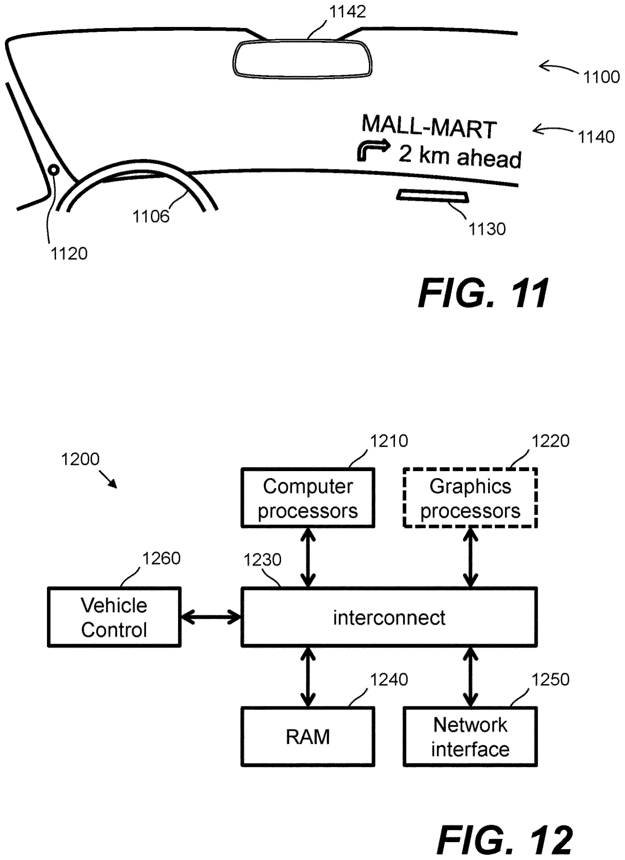

FIG. 11 shows an example of an interior of an automobile 1100 as viewed from the front seats 1032. For example, FIG. 11 may comprise a view towards the windshield 104 of FIG. 1A. FIG. 11 shows a steering wheel 1106 (such as steering wheel 106 in FIG. 1), a side microphone 1120 (such as one of side microphones 1020 in FIGS. 10A and 10B), a rear-view mirror 1142 (that may comprise front overhead multi-microphone speech capture unit 1042) and a projection device 1130. The projection device 1130 may be used to project images 1140 onto the windshield, e.g., for use as an additional visual output device (e.g., in addition to the driver visual console 1036 and the general console 1038). In FIG. 11, the images 1140 comprise directions. These may be directions that are projected following a voice command of "Find me directions to the Mall-Mart". Other examples may use a simpler response system.

### Local and Remote Speech Processing for a Vehicle

In certain cases, the functionality of the speech processing modules as described herein may be distributed. For example, certain functions may be computed locally within the automobile 1005 and certain functions may be computed by a remote ("cloud") server device. In certain cases, functionality may be duplicated on the automobile ("client") side and the remote server device ("server") side. In these cases, if a connection to the remote server device is not available then processing may be performed by a local speech processing module; if a connection to the remote server device is available then one or more of the audio data, image data and speaker feature vector may be transmitted to the remote server device for parsing a captured utterance. A remote server device may have processing resources (e.g., Central Processing Units - CPUs, Graphical Processing Units - GPUs and Random-Access Memory) and so offer improvements on local performance if a connection is available. This may be traded-off against latencies in the processing pipeline (e.g., local processing is more responsive). In one case, a local speech processing module may provide a first output, and this may be complemented and/or enhanced by a result of a remote speech processing module.

In one case, the vehicle, e.g., the automobile 1005, may be communicatively coupled to a remote server device over at least one network. The network may comprise one or more local and/or wide area networks that may be implemented using a variety of physical technologies (e.g., wired technologies such as Ethernet and/or wireless technologies such as Wi-Fi - IEEE 802.11 - standards and cellular communications technologies). In certain cases, the network may comprise a mixture of one or more private and public networks such as the Internet. The vehicle and the remote server device may communicate over the network using different technologies and communication pathways.

With reference to the example speech processing apparatus 300 of FIG. 3, in one case vector generation by the vector generator 372 may be performed either locally or remotely but the data store 374 is located locally within the automobile 1005. In this case, a static speaker feature vector may be computed locally and/or remotely but stored locally within the data store 374. Following this, the speaker feature vector 325 may be retrieved from the data store 374 within the automobile rather than received from a remote server device. This may improve a speech processing latency.

In a case where a speech processing module is remote from the vehicle, a local speech processing apparatus may comprise a transceiver to transmit data derived from one or more of audio data, image data and the speaker feature vector to the speech processing module and to receive control data from the parsing of the utterance. In one case, the transceiver may comprise a wired or wireless physical interface and one or more communications protocols that provide methods for sending and/or receiving requests in a predefined format. In one case, the transceiver may comprise an application layer interface operating on top of an Internet Protocol Suite. In this case, the application layer interface may be configured to receive communications directed towards a particular Internet Protocol address identifying a remote server device, with routing based on path names or web addresses being performed by one or more proxies and/or communication (e.g., "web") servers.

In certain cases, linguistic features generated by a speech processing module may be mapped to a voice command and a set of data for the voice command (e.g., as described with reference to the utterance parser 436 in FIG. 4). In one case, the utterance data 442 may be used by the control unit 1010 of automobile 1005 and used to implement a voice command. In one case, the utterance parser 436 may be located within a remote server device and utterance parsing may involve identifying an appropriate service to execute the voice command from the output of the speech processing module. For example, the utterance parser 436 may be configured to make an application programming interface (API) request to an identified server, the request comprising a command and any command data identified from the output of the language model. For example, an utterance of "Where is the Mall Mart?" may result in a text output of "where is the mall mart" that may be mapped to a directions service API request for vehicle mapping data with a desired location parameter of "mall mart" and a current location of the vehicle, e.g., as derived from a positioning system such as the Global Positioning System. The response may be retrieved and communicated to the vehicle, where it may be displayed as illustrated in FIG. 11.

In one case, a remote utterance parser 436 communicates response data to the control unit 1010 of the automobile 1005. This may comprise machine readable data to be communicated to the user, e.g., via a user interface or audio output. The response data may be processed and a response to the user may be output on one or more of the driver visual console 1036 and the general console 1038. Providing a response to a user may comprise the display of text and/or images on a display screen of one or more of the driver visual console 1036 and the general console 1038, or an output of sounds via a text-to-speech module. In certain cases, the response data may comprise audio data that may be processed at the control unit 1005 and used to generate an audio output, e.g., via one or more speakers. A response may be spoken to a user via speakers mounted within the interior of the automobile 1005.

### Example Embedded Computing System

FIG. 12 shows an example embedded computing system 1200 that may implement a speech processing apparatus as described herein. A system similar to the embedded computing system 1200 may be used to implement the control unit 1010 in FIG. 10. The example embedded computing system 1200 comprises one or more computer processor (CPU) cores 1210 and zero or more graphics processor (GPU) cores 1220. The processors connect through a board-level interconnect 1230 to random-access memory (RAM) devices 1240 for program code and data storage. The embedded computing system 1200 also comprises a network interface 1250 to allow the processors to communicate with remote systems and specific vehicle control circuitry 1260. By executing instructions stored in RAM devices through interface 1230, the CPUs 1210 and/or GPUs 1220 may perform functionality as described herein. In certain cases, constrained embedded computing devices may have a similar general arrangement of components, but in certain cases may have fewer computing resources and may not have dedicated graphics processors 1220.

### Example Speech Processing Method

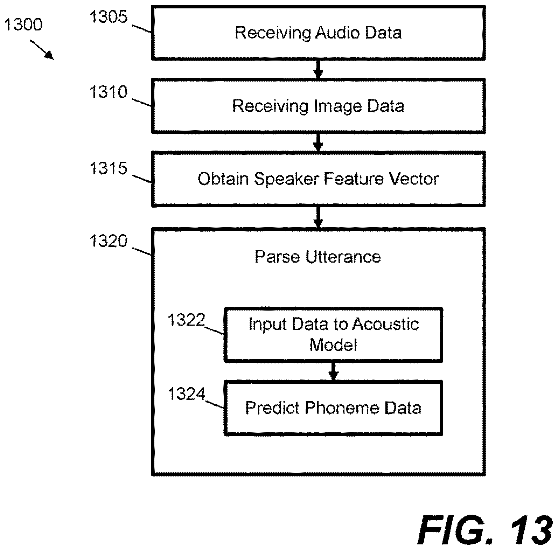

FIG. 13 shows an example method 1300 for processing speech that may be performed to improve in-vehicle speech recognition. The method 1300 begins at block 1305 where audio data is received from an audio capture device. The audio capture device may be located within a vehicle. The audio data may feature an utterance from a user. Block 1305 comprises capturing data from one or more microphones such as devices 1020, 1042 and 1044 in FIGS. 10A and 10B. In one case, block 1305 may comprise receiving audio data over a local audio interface; in another case, block 1305 may comprise receiving audio data over a network, e.g., at an audio interface that is remote from the vehicle.

At block 1310, image data from an image capture device is received. The image capture device may be located within the vehicle, e.g., may comprise the image capture device 1015 in FIG. 10A and 10B. In one case, block 1310 may comprise receiving image data over a local image interface; in another case, block 1310 may comprise receiving image data over a network, e.g., at an image interface that is remote from the vehicle.

At block 1315, a speaker feature vector is obtained based on the image data. This may comprise, for example, implementing any one of the speaker preprocessing modules 220, 320, 520 and 920. Block 1315 may be performed by a local processor of the automobile 1005 or by a remote server device. At block 1320, the utterance is parsed using a speech processing module. For example, this may comprise implementing any one of the speech processing modules 230, 330, 400, 530 and 930. Block 1320 comprises number of subblocks. These include, at subblock 1322, providing the speaker feature vector and the audio data as an input to an acoustic model of the speech processing module. This may comprise operations similar to those described with reference to FIG. 4. In certain cases, the acoustic model comprises a neural network architecture. At subblock 1324, phoneme data is predicted, using at least the neural network architecture, based on the speaker feature vector and the audio data. This may comprise using a neural network architecture that is trained to receive the speaker feature vector as an input in additional to the audio data. As both the speaker feature vector and the audio data comprise numeric representations, these may be processed similarly by the neural network architecture. In certain cases, an existing CTC or hybrid acoustic model may be configured to receive a concatenation of the speaker feature vector and the audio data, and then trained using a training set that additionally comprises image data (e.g., that is used to derive the speaker feature vector).

In certain cases, block 1315 comprises performing facial recognition on the image data to identify the person within the vehicle. For example, this may be performed as described with reference to face recognition module 370 in FIG. 3. Following this, user profile data for the person (e.g., in the vehicle) may be obtained based on the facial recognition. For example, user profile data may be retrieved from the data store 374 using a user identifier 376 as described with reference to FIG. 3. The speaker feature vector may then be obtained in accordance with the user profile data. In one case, the speaker feature vector may be retrieved as a static set of element values from the user profile data. In another case, the user profile data may indicate that the speaker feature vector is to be computed, e.g., using one or more of the audio data and the image data received at blocks 1305 and 1310. In certain cases, block 1315 comprises comparing a number of stored speaker feature vectors associated with user profile data with a predefined threshold. For example, the user profile data may indicate how many previous voice queries have been performed by a user identified using face recognition. Responsive to the number of stored speaker feature vectors being below the predefined threshold, the speaker feature vector may be computed using one or more of the audio data and the image data. Responsive to the number of stored speaker feature vectors being greater than the predefined threshold, a static speaker feature vector may be obtained, e.g., one that is stored within or is accessible via the user profile data. In this case, the static speaker feature vector may be generated using the number of stored speaker feature vectors.

In certain examples, block 1315 may comprise processing the image data to generate one or more speaker feature vectors based on lip movement within the facial area of the person. For example, a lip-reading module, such as lip feature extractor 924 or a suitably configured neural speaker preprocessing module 520, may be used. The output of the lip-reading module may be used to supply one or more speaker feature vectors to a speech processing module, and/or may be combined with other values (such as i or x-vectors) to generate a larger speaker feature vector.

In certain examples, block 1320 comprises providing the phoneme data to a language model of the speech processing module, predicting a transcript of the utterance using the language model, and determining a control command for the vehicle using the transcript. For example, block 1320 may comprise operations similar to those described with reference to FIG. 4.

### Utterance Parsing Example

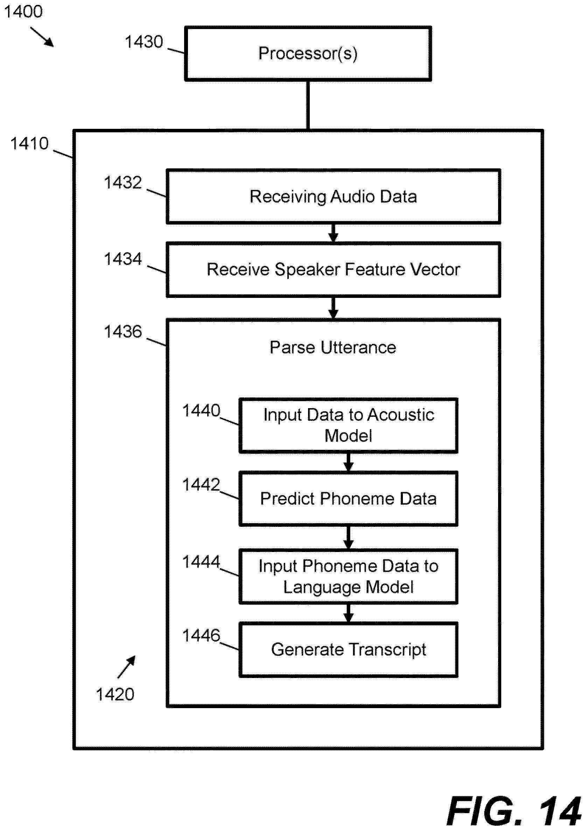

FIG. 14 shows an example processing system 1400 comprising a non-transitory computer-readable storage medium 1410 storing instructions 1420 which, when executed by at least one processor 1430, cause the at least one processor to perform a series of operations. The operations of this example use previously described approaches to generate a transcription of an utterance. These operations may be performed within a vehicle, e.g. as previously described, or extend an in-vehicle example to situations that are not vehicle-based, e.g., that may be implemented using desktop, laptop, mobile or server computing devices, amongst others.

Via instruction 1432, the processor 1430 is configured to receive audio data from an audio capture device. This may comprise accessing a local memory containing the audio data and/or receiving a data stream or set of array values over a network. The audio data may have a form as described with reference to other examples herein. Via instruction 1434, the processor 1430 is configured to receive a speaker feature vector. The speaker feature vector is obtained based on image data from an image capture device, the image data featuring a facial area of a user. For example, the speaker feature vector may be obtained using the approaches described with reference to any of FIGS. 2, 3, 5 and 9. The speaker feature vector may be computed locally, e.g., by the processor 1430, accessed from a local memory, and/or received over a network interface (amongst others). Via instruction 1436, the processor 1430 is instructed to parse the utterance using a speech processing module. The speech processing module may comprise any of the modules described with reference to any of FIGS. 2, 3, 4, 5 and 9.

FIG. 14 shows that instruction 1436 may be broken down into a number of further instructions. Via instruction 1440, the processor 1430 is instructed to provide the speaker feature vector and the audio data as an input to an acoustic model of the speech processing module. This may be achieved in a manner similar to that described with reference to FIG. 4. In the present example, the acoustic model comprises a neural network architecture. Via instruction 1442, the processor 1430 is instructed to predict, using at least the neural network architecture, phoneme data based on the speaker feature vector and the audio data. Via instruction 1444, the processor 1430 is instructed to provide the phoneme data to a language model of the speech processing module. This may also be performed in a manner similar to that shown in FIG. 4. Via instruction 1446, the processor 1430 is instructed to generate a transcript of the utterance using the language model. For example, the transcript may be generated as an output of the language model. In certain cases, the transcript may be used by a control system to execute a voice command, such as control unit 1010 in the automobile 1005. In other cases, the transcript may comprise an output for a speech-to-text system. In the latter case, the image data may be retrieved from a web-camera or the like that is communicatively coupled to the computing device comprising the processor 1430. For a mobile computing device, the image data may be obtained from a forward-facing image capture device.

In certain examples, the speaker feature vector received according to instructions 1434 comprises one or more of: vector elements that are dependent on the speaker that are generated based on the audio data (e.g., i-vector or x-vector components); vector elements that are dependent on lip movement of the speaker that is generated based on the image data (e.g., as generated by a lip-reading module); and vector elements that are dependent on a face of the speaker that is generated based on the image data. In one case, the processor 1430 may comprise part of a remote server device and the audio data and the speaker image vector may be received from a motor vehicle, e.g., as part of a distributed processing pipeline.

### Example Implementations

Certain examples are described that relate to speech processing including automatic speech recognition. Certain examples relate to the processing of certain spoken languages. Various examples operate, similarly, for other languages or combinations of languages. Certain examples improve an accuracy and a robustness of speech processing by incorporating additional information that is derived from an image of a person making an utterance. This additional information may be used to improve linguistic models. Linguistic models may comprise one or more of acoustic models, pronunciation models and language models.

Certain examples described herein may be implemented to address the unique challenges of performing automatic speech recognition within a vehicle, such as an automobile. In certain combined examples, image data from a camera may be used to determine lip-reading features and to recognize a face to enable an i-vector and/or x-vector profile to be built and selected. By implementing approaches as described herein it may be possible to perform automatic speech recognition within the noisy, multichannel environment of a motor vehicle.

Certain examples described herein may increase an efficiency of speech processing by including one or more features derived from image data, e.g. lip positioning or movement, within a speaker feature vector that is provided as an input to an acoustic model that also receives audio data as an input (a singular model), e.g. rather than having an acoustic model that only receives an audio input or separate acoustic models for audio and image data.

Certain methods and sets of operations may be performed by instructions that are stored upon a non-transitory computer readable medium. The non-transitory computer readable medium stores code comprising instructions that, if executed by one or more computers, would cause the computer to perform steps of methods described herein. The non-transitory computer readable medium may comprise one or more of a rotating magnetic disk, a rotating optical disk, a flash random access memory (RAM) chip, and other mechanically moving or solid-state storage media. Any type of computer-readable medium is appropriate for storing code comprising instructions according to various example.

Certain examples described herein may be implemented as so-called system-on-chip (SoC) devices. SoC devices control many embedded in-vehicle systems and may be used to implement the functions described herein. In one case, one or more of the speaker preprocessing module and the speech processing module may be implemented as a SoC device. An SoC device may comprise one or more processors (e.g., CPUs or GPUs), random-access memory (RAM - e.g., off-chip dynamic RAM or DRAM), a network interface for wired or wireless connections such as ethernet, WiFi, 3G, 4G long-term evolution (LTE), 5G, and other wireless interface standard radios. An SoC device may also comprise various I/O interface devices, as needed for different peripheral devices such as touch screen sensors, geolocation receivers, microphones, speakers, Bluetooth peripherals, and USB devices, such as keyboards and mice, among others. By executing instructions stored in RAM devices processors of an SoC device may perform steps of methods as described herein.

Certain examples have been described herein and it will be noted that different combinations of different components from different examples may be possible. Salient features are presented to better explain examples; however, it is clear that certain features may be added, modified and/or omitted without modifying the functional aspects of these examples as described.

Various examples are methods that use the behavior of either or a combination of humans and machines. Method examples are complete wherever in the world most constituent steps occur. Some examples are one or more non-transitory computer readable media arranged to store such instructions for methods described herein. Whatever machine holds non-transitory computer readable media comprising any of the necessary code may implement an example. Some examples may be implemented as: physical devices such as semiconductor chips; hardware description language representations of the logical or functional behavior of such devices; and one or more non-transitory computer readable media arranged to store such hardware description language representations. Descriptions herein reciting principles, aspects, and embodiments encompass both structural and functional equivalents thereof. Elements described herein as coupled have an effectual relationship realizable by a direct connection or indirectly with one or more other intervening elements.

## Claims

1. A vehicle-mounted apparatus comprising:
an audio interface configured to receive audio data from an audio capture device of the vehicle, the audio data featuring an utterance of a person within the vehicle;
an image interface configured to receive image data from an image capture device to capture images from the vehicle, wherein the image data includes a facial area of the person within the vehicle;
a speaker preprocessing module configured to receive the image data and obtain, based on the image data, a speaker feature vector, wherein obtaining the speaker feature vector comprises:
performing facial recognition on the image data to identify the person within the vehicle;
obtaining user profile data for the person based on the facial recognition; and
obtaining the speaker feature vector in accordance with the user profile data,
wherein obtaining the speaker feature vector in accordance with the user profile data comprises:
comparing a number of stored speaker feature vectors associated with the user profile data with a predefined threshold;
responsive to the number of stored speaker feature vectors being below the predefined threshold, computing the speaker feature vector using the audio data and the image data; and
responsive to the number of stored speaker feature vectors being greater than the predefined threshold, obtaining a static speaker feature vector associated with the user profile data, the static speaker feature vector being generated using the number of stored speaker feature vectors; and
a speech processing module configured to parse the utterance based on the audio data and the speaker feature vector, wherein the speech processing module comprises an acoustic model configured to process the audio data and to predict phoneme data for use in parsing the utterance, wherein the speech processing module is configured to use the speaker feature vector to configure the acoustic model, the speech processing module comprising:
a database of acoustic model configurations;
an acoustic model selector configured to select an acoustic model configuration from the database based on the speaker feature vector; and
an acoustic model instance configured to process the audio data, the acoustic model instance being instantiated based on the acoustic model configuration selected by the acoustic model selector, the acoustic model instance being configured to generate the phoneme data for use in parsing the utterance.

2. The vehicle-mounted apparatus of claim 1, wherein the acoustic model comprises a neural network architecture.

3. The vehicle-mounted apparatus of claim 1 or 2, wherein the acoustic model is configured to receive the speaker feature vector and the audio data as an input and is trained to use the speaker feature vector and the audio data to predict the phoneme data.

4. The vehicle-mounted apparatus of any one of claims 1 to 3, wherein the acoustic model comprises a connectionist temporal classification (CTC) model.

5. The vehicle-mounted apparatus of any one of claims 1 to 4, wherein the speech processing module comprises:
a language model communicatively coupled to the acoustic model to receive the phoneme data and to generate a transcription representing the utterance, and optionally wherein the language model is configured to use the speaker feature vector to generate the transcription representing the utterance.

6. The vehicle-mounted apparatus of any preceding claim, wherein the computed speaker feature vector comprises:
a first portion, that is dependent on the person and generated based on the audio data; and
a second portion that is dependent on lip movement of the person that is generated based on the image data;
wherein the speaker preprocessing module comprises:
a lip-reading module, implemented by a processor, configured to generate the second portion of the speaker feature vector based on lip movement within the facial area of the person.

7. The vehicle-mounted apparatus of any preceding claim, wherein the speaker preprocessing module comprises a speaker feature vector prediction neural network architecture, the speaker feature vector prediction neural network architecture being configured to receive data derived from one or more of the audio data and the image data and predict the speaker feature vector.

8. The vehicle-mounted apparatus of any preceding claim, wherein the speaker preprocessing module is configured to:
compute a plurality of speaker feature vectors, for a predefined number of utterances; and
compute the static speaker feature vector based on the plurality of speaker feature vectors for the predefined number of utterances.

9. The vehicle-mounted apparatus of any preceding claim, wherein the image capture device is configured to capture electromagnetic radiation having infra-red wavelengths, the image capture device being configured to send the image data to the image interface.

10. The vehicle-mounted apparatus of any preceding claim, wherein the speaker preprocessing module is configured to process the image data to extract one or more portions of the image data,
wherein the extracted one or more portions are to be used to obtain the speaker feature vector.

11. The vehicle-mounted apparatus of any preceding claim, the apparatus comprising:
a transceiver configured to transmit data derived from the audio data and the image data to a remote speech processing module and to receive, from the remote speech processing module, control data from parsing of the utterance by the remote speech processing module, the remote speech processing module being remote from the vehicle and the apparatus.

12. The vehicle-mounted apparatus of any preceding claim, wherein the speaker feature vector comprises:
a first portion, that is dependent on the person and generated based on the audio data; and
a second portion that is dependent on lip movement of the person that is generated based on the image data; and
a third portion that is dependent on the face of the speaker that is generated based on the image data.

13. A computer-implemented method of processing an utterance comprising:
receiving audio data from an audio capture device located within a vehicle, the audio data featuring an utterance of a person within the vehicle;
receiving image data from an image capture device to capture images within the vehicle, the image data featuring a facial area of the person within the vehicle;
obtaining a speaker feature vector based on the image data, wherein obtaining the speaker feature vector comprises:
performing facial recognition on the image data to identify the person within the vehicle;
obtaining user profile data for the person based on the facial recognition; and
obtaining the speaker feature vector in accordance with the user profile data,
wherein obtaining the speaker feature vector in accordance with the user profile data comprises:
comparing a number of stored speaker feature vectors associated with the user profile data with a predefined threshold;
responsive to the number of stored speaker feature vectors being below the predefined threshold, computing the speaker feature vector using the audio data and the image data; and
responsive to the number of stored speaker feature vectors being greater than the predefined threshold, obtaining a static speaker feature vector associated with the user profile data, the static speaker feature vector being generated using the number of stored speaker feature vectors;
using the speaker feature vector to configure an acoustic model, wherein the acoustic model is configured to process the audio data and to predict phoneme data for use in parsing the utterance;
selecting an acoustic model configuration from a database of acoustic model configurations based on the speaker feature vector;
instantiating an acoustic model instance based on the selected acoustic model configuration;
processing, by the acoustic model instance, the audio data;
generating the phoneme data, by the acoustic model instance, for use in parsing the utterance; and
parsing the utterance using a speech processing module comprising the acoustic model instance, based on the audio data and the speaker feature vector.

14. A program stored on a computer readable storage medium including instructions which, when executed by at least one processor, cause the at least one processor to carry out the method of claim 13.

## Patentansprüche

1. Fahrzeugmontierte Vorrichtung, umfassend:
eine Audioschnittstelle, ausgelegt zum Empfangen von Audiodaten von einer Audioerfassungseinrichtung des Fahrzeugs, wobei die Audiodaten eine Äußerung einer Person in dem Fahrzeug enthalten;
eine Bildschnittstelle, ausgelegt zum Empfangen von Bilddaten von einer Bilderfassungseinrichtung zum Erfassen von Bildern aus dem Fahrzeug, wobei die Bilddaten einen Gesichtsbereich der Person in dem Fahrzeug beinhalten;
ein Sprechervorverarbeitungsmodul, ausgelegt zum Empfangen der Bilddaten und Erhalten, basierend auf den Bilddaten, eines Sprechermerkmalsvektors, wobei das Erhalten des Sprechermerkmalsvektors Folgendes umfasst:
Durchführen von Gesichtserkennung an den Bilddaten, um die Person in dem Fahrzeug zu identifizieren;
Erhalten von Benutzerprofildaten für die Person basierend auf der Gesichtserkennung; und
Erhalten des Sprechermerkmalsvektors gemäß den Benutzerprofildaten, wobei das Erhalten des Sprechermerkmalsvektors gemäß den Benutzerprofildaten Folgendes umfasst:
Vergleichen einer Anzahl gespeicherter Sprechermerkmalsvektoren im Zusammenhang mit den Benutzerprofildaten mit einer vordefinierten Schwelle;
als Reaktion darauf, dass die Anzahl gespeicherter Sprechermerkmalsvektoren unter der vordefinierten Schwelle liegt, Berechnen des Sprechermerkmalsvektors unter Verwendung der Audiodaten und der Bilddaten; und
als Reaktion darauf, dass die Anzahl gespeicherter Sprechermerkmalsvektoren größer als die vordefinierte Schwelle ist, Erhalten eines statischen Sprechermerkmalsvektors im Zusammenhang mit den Benutzerprofildaten, wobei der statische Sprechermerkmalsvektor unter Verwendung der Anzahl gespeicherter Sprechermerkmalsvektoren erzeugt wird; und
ein Sprachverarbeitungsmodul, ausgelegt zum Parsen der Äußerung basierend auf den Audiodaten und dem Sprechermerkmalsvektor, wobei das Sprachverarbeitungsmodul ein akustisches Modul umfasst, ausgelegt zum Verarbeiten der Audiodaten und zum Vorhersagen von Phonemdaten zur Verwendung beim Parsen der Äußerung, wobei das Sprachverarbeitungsmodul dazu ausgelegt ist, den Sprechermerkmalsvektor zum Konfigurieren des akustischen Modells zu verwenden, wobei das Sprachverarbeitungsmodul Folgendes umfasst:
eine Datenbank von Akustikmodellkonfigurationen;
einen Akustikmodellselektor, ausgelegt zum Auswählen einer Akustikmodellkonfiguration aus der Datenbank basierend auf dem Sprechermerkmalsvektor; und
eine Akustikmodellinstanz, ausgelegt zum Verarbeiten der Audiodaten, wobei die Akustikmodellinstanz basierend auf der durch den Akustikmodellselektor ausgewählten Akustikmodellkonfiguration instanziiert wird, wobei die Akustikmodellinstanz dazu ausgelegt ist, die Phonemdaten zur Verwendung beim Parsen der Äußerung zu erzeugen.

2. Fahrzeugmontierte Vorrichtung nach Anspruch 1, wobei das akustische Modell eine Neuronalnetzarchitektur umfasst.

3. Fahrzeugmontierte Vorrichtung nach Anspruch 1 oder 2, wobei das akustische Modell dazu ausgelegt ist, den Sprechermerkmalsvektor und die Audiodaten als Eingabe zu empfangen, und dazu trainiert ist, den Sprechermerkmalsvektor und die Audiodaten zur Vorhersage der Phonemdaten zu verwenden.

4. Fahrzeugmontierte Vorrichtung nach einem der Ansprüche 1 bis 3, wobei das akustische Modell ein Connectionist-Temporal-Classification(CTC)-Modell umfasst.

5. Fahrzeugmontierte Vorrichtung nach einem der Ansprüche 1 bis 4, wobei das Sprachverarbeitungsmodul Folgendes umfasst:
ein Sprachenmodell, das kommunikativ mit dem akustischen Modell gekoppelt ist, um die Phonemdaten zu empfangen und eine Transkription zu erzeugen, die die Äußerung darstellt, und wobei optional das Sprachenmodell dazu ausgelegt ist, den Sprechermerkmalsvektor zum Erzeugen der die Äußerung darstellenden Transkription zu verwenden.

6. Fahrzeugmontierte Vorrichtung nach einem der vorhergehenden Ansprüche, wobei der berechnete Sprechermerkmalsvektor Folgendes umfasst:
einen ersten Teil, der von der Person abhängig ist und basierend auf den Audiodaten erzeugt wird; und
einen zweiten Teil, der von einer Lippenbewegung der Person abhängig ist, die basierend auf den Bilddaten erzeugt wird;
wobei das Sprechervorverarbeitungsmodul Folgendes umfasst:
ein Lippenlesemodul, das durch einen Prozessor implementiert wird, ausgelegt zum Erzeugen des zweiten Teils des Sprechermerkmalsvektor basierend auf einer Lippenbewegung im Gesichtsbereich der Person.

7. Fahrzeugmontierte Vorrichtung nach einem der vorhergehenden Ansprüche, wobei das Sprechervorverarbeitungsmodul eine Sprechermerkmalsvektorvorhersage-Neuronalnetzarchitektur umfasst, wobei die Sprechermerkmalsvektorvorhersage-Neuronalnetzarchitektur dazu ausgelegt ist, Daten zu empfangen, die von den Audiodaten und/oder den Bilddaten abgeleitet werden, und den Sprechermerkmalsvektor vorherzusagen.

8. Fahrzeugmontierte Vorrichtung nach einem der vorhergehenden Ansprüche, wobei das Sprechervorverarbeitungsmodul zu Folgendem ausgelegt ist:
Berechnen mehrerer Sprechermerkmalsvektoren für eine vordefinierte Anzahl von Äußerungen; und
Berechnen des statischen Sprechermerkmalsvektors basierend auf den mehreren Sprechermerkmalsvektoren für die vordefinierte Anzahl von Äußerungen.

9. Fahrzeugmontierte Vorrichtung nach einem der vorhergehenden Ansprüche, wobei die Bilderfassungseinrichtung dazu ausgelegt ist, elektromagnetische Strahlung mit Infrarotwellenlängen zu erfassen, wobei die Bilderfassungseinrichtung dazu ausgelegt ist, die Bilddaten an die Bildschnittstelle zu senden.

10. Fahrzeugmontierte Vorrichtung nach einem der vorhergehenden Ansprüche, wobei das Sprechervorverarbeitungsmodul dazu ausgelegt ist, die Bilddaten zu verarbeiten, um einen oder mehrere Teile der Bilddaten zu extrahieren,
wobei der eine oder die mehreren extrahierten Teile zum Erhalten des Sprechermerkmalsvektor zu verwenden sind.

11. Fahrzeugmontierte Vorrichtung nach einem der vorhergehenden Ansprüche, wobei die Vorrichtung Folgendes umfasst:
einen Sendeempfänger, ausgelegt zum Übertragen von aus den Audiodaten und den Bilddaten abgeleiteten Daten an ein entferntes Sprachverarbeitungsmodul und zum Empfangen, von dem entfernten Sprachverarbeitungsmodul, von Steuerdaten zum Parsen der Äußerung durch das entfernte Sprachverarbeitungsmodul, wobei das entfernte Sprachverarbeitungsmodul von dem Fahrzeug und der Vorrichtung entfernt ist.

12. Fahrzeugmontierte Vorrichtung nach einem der vorhergehenden Ansprüche, wobei der Sprechermerkmalsvektor Folgendes umfasst:
einen ersten Teil, der von der Person abhängig ist und basierend auf den Audiodaten erzeugt wird; und
einen zweiten Teil, der von einer Lippenbewegung der Person abhängig ist, die basierend auf den Bilddaten erzeugt wird; und
einen dritten Teil, der von dem Gesicht des Sprechers abhängig ist, das basierend auf den Bilddaten erzeugt wird.

13. Computerimplementiertes Verfahren zum Verarbeiten einer Äußerung, umfassend:
Empfangen von Audiodaten von einer Audioerfassungseinrichtung, die sich in einem Fahrzeug befindet, wobei die Audiodaten eine Äußerung einer Person in dem Fahrzeug enthalten;
Empfangen von Bilddaten von einer Bilderfassungseinrichtung zum Erfassen von Bildern in dem Fahrzeug, wobei die Bilddaten einen Gesichtsbereich der Person in dem Fahrzeug enthalten;
Erhalten eines Sprechermerkmalsvektors basierend auf den Bilddaten, wobei das Erhalten des Sprechermerkmalsvektors Folgendes umfasst:
Durchführen von Gesichtserkennung an den Bilddaten, um die Person in dem Fahrzeug zu identifizieren;
Erhalten von Benutzerprofildaten für die Person basierend auf der Gesichtserkennung; und
Erhalten des Sprechermerkmalsvektors gemäß den Benutzerprofildaten, wobei das Erhalten des Sprechermerkmalsvektors gemäß den Benutzerprofildaten Folgendes umfasst:
Vergleichen einer Anzahl gespeicherter Sprechermerkmalsvektoren im Zusammenhang mit den Benutzerprofildaten mit einer vordefinierten Schwelle;
als Reaktion darauf, dass die Anzahl gespeicherter Sprechermerkmalsvektoren unter der vordefinierten Schwelle liegt, Berechnen des Sprechermerkmalsvektors unter Verwendung der Audiodaten und der Bilddaten; und
als Reaktion darauf, dass die Anzahl gespeicherter Sprechermerkmalsvektoren größer als die vordefinierte Schwelle ist, Erhalten eines statischen Sprechermerkmalsvektors im Zusammenhang mit den Benutzerprofildaten, wobei der statische Sprechermerkmalsvektor unter Verwendung der Anzahl gespeicherter Sprechermerkmalsvektoren erzeugt wird;
Verwenden des Sprechermerkmalsvektors zum Konfigurieren eines akustischen Modells, wobei das akustische Modul zum Verarbeiten der Audiodaten und zum Vorhersagen von Phonemdaten zur Verwendung beim Parsen der Äußerung ausgelegt ist;
Auswählen einer Akustikmodellkonfiguration aus einer Datenbank von Akustikmodellkonfigurationen basierend auf dem Sprechermerkmalsvektor;
Instanziieren einer Akustikmodellinstanz basierend auf der ausgewählten Akustikmodellkonfiguration;
Verarbeiten, durch die Akustikmodellinstanz, der Audiodaten;
Erzeugen der Phonemdaten, durch die Akustikmodellinstanz, zur Verwendung beim Parsen der Äußerung; und
Parsen der Äußerung unter Verwendung eines Sprachverarbeitungsmoduls, das die Akustikmodellinstanz umfasst, basierend auf den Audiodaten und dem Sprechermerkmalsvektor.

14. Programm, das auf einem computerlesbaren Speichermedium gespeichert ist, das Anweisungen umfasst, die bei Ausführung durch mindestens einen Prozessor bewirken, dass der mindestens eine Prozessor das Verfahren nach Anspruch 13 ausführt.

## Revendications

1. Appareil monté sur véhicule comprenant :
une interface audio configurée pour recevoir des données audio provenant d'un dispositif de capture audio du véhicule, les données audio comportant un énoncé d'une personne à l'intérieur du véhicule ;
une interface d'image configurée pour recevoir des données d'image provenant d'un dispositif de capture d'image afin de capturer des images du véhicule, les données d'image comprenant une zone faciale de la personne à l'intérieur du véhicule ;
un module de prétraitement de locuteur configuré pour recevoir les données d'image et obtenir, sur la base des données d'image, un vecteur de caractéristiques de locuteur, l'obtention du vecteur de caractéristiques de locuteur comprenant :
la réalisation d'une reconnaissance faciale sur les données d'image pour identifier la personne à l'intérieur du véhicule ;
l'obtention de données de profil utilisateur pour la personne sur la base de la reconnaissance faciale ; et
l'obtention du vecteur de caractéristiques de locuteur conformément aux données de profil utilisateur, l'obtention du vecteur de caractéristiques de locuteur conformément aux données de profil utilisateur comprenant :
la comparaison d'un certain nombre de vecteurs de caractéristiques de locuteur stockés associés aux données de profil utilisateur avec un seuil prédéfini ;
en réponse au fait que le nombre de vecteurs de caractéristiques de locuteur stockés est inférieur au seuil prédéfini, le calcul du vecteur de caractéristiques de locuteur à l'aide des données audio et des données d'image ; et
en réponse au fait que le nombre de vecteurs de caractéristiques de locuteur stockés est supérieur au seuil prédéfini, l'obtention d'un vecteur de caractéristiques de locuteur statique associé aux données de profil utilisateur, le vecteur de caractéristiques de locuteur statique étant généré à l'aide du nombre de vecteurs de caractéristiques de locuteur stockés ; et
un module de traitement vocal configuré pour analyser l'énoncé sur la base des données audio et du vecteur de caractéristiques de locuteur, le module de traitement vocal comprenant un modèle acoustique configuré pour traiter les données audio et prédire les données de phonème à utiliser dans l'analyse de l'énoncé, le module de traitement vocal étant configuré pour utiliser le vecteur de caractéristiques de locuteur pour configurer le modèle acoustique, le module de traitement vocal comprenant :
une base de données de configurations de modèle acoustique ;
un sélecteur de modèle acoustique configuré pour sélectionner une configuration de modèle acoustique à partir de la base de données sur la base du vecteur de caractéristiques de locuteur ; et
une instance de modèle acoustique configurée pour traiter les données audio, l'instance de modèle acoustique étant instanciée sur la base de la configuration de modèle acoustique sélectionnée par le sélecteur de modèle acoustique, l'instance de modèle acoustique étant configurée pour générer les données de phonème à utiliser dans l'analyse de l'énoncé.

2. Appareil monté sur véhicule selon la revendication 1, le modèle acoustique comprenant une architecture de réseau neuronal.

3. Appareil monté sur véhicule selon la revendication 1 ou 2, le modèle acoustique étant configuré pour recevoir le vecteur de caractéristiques de locuteur et les données audio en tant qu'entrée et étant entraîné pour utiliser le vecteur de caractéristiques de locuteur et les données audio pour prédire les données de phonème.

4. Appareil monté sur véhicule selon l'une quelconque des revendications 1 à 3, le modèle acoustique comprenant un modèle de classification temporelle connexionniste (CTC).

5. Appareil monté sur véhicule selon l'une quelconque des revendications 1 à 4, le module de traitement vocal comprenant :
un modèle de langage couplé de manière communicative au modèle acoustique pour recevoir les données de phonème et générer une transcription représentant l'énoncé, et éventuellement, le modèle de langage étant configuré pour utiliser le vecteur de caractéristiques de locuteur pour générer la transcription représentant l'énoncé.

6. Appareil monté sur véhicule selon l'une quelconque des revendications précédentes, le vecteur de caractéristiques de locuteur calculé comprenant :
une première partie, qui dépend de la personne et est générée sur la base des données audio ; et
une deuxième partie qui dépend du mouvement des lèvres de la personne et qui est générée sur la base des données d'image ;
le module de prétraitement du locuteur comprenant :
un module de lecture labiale, mis en oeuvre par un processeur, configuré pour générer la deuxième partie du vecteur de caractéristiques de locuteur sur la base du mouvement des lèvres dans la zone faciale de la personne.

7. Appareil monté sur véhicule selon l'une quelconque des revendications précédentes, le module de prétraitement de locuteur comprenant une architecture de réseau neuronal de prédiction de vecteur de caractéristiques de locuteur, l'architecture de réseau neuronal de prédiction de vecteur de caractéristiques de locuteur étant configurée pour recevoir des données dérivées d'une ou plusieurs des données audio et des données d'image et prédire le vecteur de caractéristiques de locuteur.

8. Appareil monté sur véhicule selon l'une quelconque des revendications précédentes, le module de prétraitement de locuteur étant configuré pour :
calculer une pluralité de vecteurs de caractéristiques de locuteur, pour un nombre prédéfini d'énoncés ; et
calculer le vecteur de caractéristiques de locuteur statique sur la base de la pluralité de vecteurs de caractéristiques de locuteur pour le nombre prédéfini d'énoncés.

9. Appareil monté sur véhicule selon l'une quelconque des revendications précédentes, le dispositif de capture d'image étant configuré pour capturer un rayonnement électromagnétique ayant des longueurs d'onde infrarouges, le dispositif de capture d'image étant configuré pour envoyer les données d'image à l'interface d'image.

10. Appareil monté sur véhicule selon l'une quelconque des revendications précédentes, le module de prétraitement de locuteur étant configuré pour traiter les données d'image afin d'extraire une ou plusieurs parties des données d'image,
la ou les parties extraites devant être utilisées pour obtenir le vecteur de caractéristiques de locuteur.

11. Appareil monté sur véhicule selon l'une quelconque des revendications précédentes, l'appareil comprenant :
un émetteur-récepteur configuré pour transmettre des données dérivées des données audio et des données d'image à un module de traitement vocal distant et pour recevoir, du module de traitement vocal distant, des données de commande provenant de l'analyse de l'énoncé par le module de traitement vocal distant, le traitement vocal distant module étant à distance du véhicule et de l'appareil.

12. Appareil monté sur véhicule selon l'une quelconque des revendications précédentes, le vecteur de caractéristiques de locuteur comprenant :
une première partie, qui dépend de la personne et est générée sur la base des données audio ; et
une deuxième partie qui dépend du mouvement des lèvres de la personne et qui est générée sur la base des données d'image ; et
une troisième partie qui dépend du visage du locuteur et qui est générée sur la base des données d'image.

13. Procédé mis en oeuvre par ordinateur pour traiter un énoncé comprenant :
la réception de données audio provenant d'un dispositif de capture audio situé à l'intérieur d'un véhicule, les données audio comportant un énoncé d'une personne à l'intérieur du véhicule ;
la réception de données d'image provenant d'un dispositif de capture d'image pour capturer des images à l'intérieur du véhicule, les données d'image présentant une zone faciale de la personne à l'intérieur du véhicule ;
l'obtention d'un vecteur de caractéristiques de locuteur sur la base des données d'image, l'obtention du vecteur de caractéristiques de locuteur comprenant :
la réalisation d'une reconnaissance faciale sur les données d'image pour identifier la personne à l'intérieur du véhicule ;
l'obtention de données de profil utilisateur pour la personne sur la base de la reconnaissance faciale ; et
l'obtention du vecteur de caractéristiques de locuteur conformément aux données de profil utilisateur, l'obtention du vecteur de caractéristiques de locuteur conformément aux données de profil utilisateur comprenant :
la comparaison d'un certain nombre de vecteurs de caractéristiques de locuteur stockés associés aux données de profil utilisateur avec un seuil prédéfini ;
en réponse au fait que le nombre de vecteurs de caractéristiques de locuteur stockés est inférieur au seuil prédéfini, le calcul du vecteur de caractéristiques de locuteur à l'aide des données audio et des données d'image ; et
en réponse au fait que le nombre de vecteurs de caractéristiques de locuteur stockés est supérieur au seuil prédéfini, l'obtention d'un vecteur de caractéristiques de locuteur statique associé aux données de profil utilisateur, le vecteur de caractéristiques de locuteur statique étant généré à l'aide du nombre de vecteurs de caractéristiques de locuteur stockés ;
l'utilisation du vecteur de caractéristiques de locuteur pour configurer un modèle acoustique, le modèle acoustique étant configuré pour traiter les données audio et prédire les données de phonème à utiliser dans l'analyse de l'énoncé ;
la sélection d'une configuration de modèle acoustique à partir d'une base de données de configurations de modèle acoustique sur la base du vecteur de caractéristiques de locuteur ;
l'instanciation d'une instance de modèle acoustique sur la base de la configuration de modèle acoustique sélectionnée ;
le traitement, par l'instance de modèle acoustique, des données audio ;
la génération des données de phonème, par l'instance de modèle acoustique, pour les utiliser dans l'analyse de l'énoncé ; et
l'analyse de l'énoncé à l'aide d'un module de traitement vocal comprenant l'instance de modèle acoustique, sur la base des données audio et du vecteur de caractéristiques de locuteur.

14. Programme stocké sur un support de stockage lisible par ordinateur comprenant des instructions qui, lorsqu'elles sont exécutées par au moins un processeur, amènent l'au moins un processeur à mettre en oeuvre le procédé selon la revendication 13.
